# EUROPEAN PATENT APPLICATION

(11) **EP 4 664 988 A1**
(43) Date of publication of application: **17.12.2025**
(21) Application number: 23920551.1
(22) Date of filing: 10.02.2023
(51) Int. Cl.: H04W 28/10

(54) **INFORMATION TRANSMISSION METHOD AND APPARATUS, AND DEVICE, MEDIUM AND PROGRAM PRODUCT**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN); YOU, Xin, Dongguan, Guangdong 523860 (CN)
(74) Representative: Taor, Simon Edward William
(86) International application number: PCT/CN2023/075538
(87) International publication number: WO 2024/164344

(57) **Abstract**

The disclosure discloses an information transmission method and apparatus, a device, a medium, and a program product, which belongs to the field of communication. The method is performed by a first device and includes the following. The first device performs a transmission-related operation on artificial intelligence (AI) information and/or at least one data block associated with the AI information and/or an AI information data packet associated with the at least one data block associated with the AI information. The at least one data block is obtained by dividing the AI information. The AI information is information related to an AI/machine learning (ML) model. According to the method, the first device performs the transmission-related operation on the AI information and/or the at least one data block associated with the AI information and/or the AI information data packet associated with the at least one data block associated with the AI information. In this way, transmission of a part of AI/ML model data is realized, thereby improving the transmission efficiency and the transmission flexibility of the information related to the AI/ML model.

## Description

### TECHNICAL FIELD

Embodiments of the disclosure relate to the field of communication, and in particular, to an information transmission method and apparatus, a device, a medium, and a program product.

### BACKGROUND

With the continuous development of artificial intelligence (Al) and machine learning (ML) technologies, a combination of communication technology and AI/ML technology is one of future communication trends. To adapt to the complexity and diversity of a scenario of a communication system, an AI/ML model is introduced in the communication system.

Information related to the AI/ML model may contain a large amount of data. In related technologies, the transmission efficiency of the information related to the AI/ML model is low and there are problems such as insufficient transmission flexibility. How to improve the transmission efficiency and the transmission flexibility of the information related to the AI/ML model is a problem to be solved.

### SUMMARY

The disclosure provides an information transmission method and apparatus, a device, a medium, and a program product, and the technical solution at least includes the following.

According to one aspect of embodiments of the disclosure, an information transmission method is provided. The method is performed by a first device and includes the following. The first device performs a transmission-related operation on artificial intelligence (AI) information and/or at least one data block associated with the AI information and/or an AI information data packet associated with the at least one data block associated with the AI information. The at least one data block is obtained by dividing the AI information. The AI information is information related to an AI/machine learning (ML) model.

According to another aspect of embodiments of the disclosure, an information transmission method is provided. The method is performed by a second device and includes the following. The second device performs a transmission-related operation on AI information and/or at least one data block associated with the AI information and/or an AI information data packet associated with the at least one data block associated with the AI information. The at least one data block is obtained by dividing the AI information. The AI information is information related to an AI/ML model.

According to another aspect of embodiments of the disclosure, an information transmission apparatus is provided. The apparatus includes a first transmission module. The first transmission module is configured to perform a transmission-related operation on AI information and/or at least one data block associated with the AI information and/or an AI information data packet associated with the at least one data block associated with the AI information. The at least one data block is obtained by dividing the AI information. The AI information is information related to an AI/ML model.

According to another aspect of embodiments of the disclosure, an information transmission apparatus is provided. The apparatus includes a second transmission module. The second transmission module is configured to perform a transmission-related operation on AI information and/or at least one data block associated with the AI information and/or an AI information data packet associated with the at least one data block associated with the AI information. The at least one data block is obtained by dividing the AI information. The AI information is information related to an AI/ML model.

According to another aspect of embodiments of the disclosure, a first device is provided. The first device includes a processor, a transceiver connected to the processor, and a memory configured to store executable instructions for the processor. The processor is configured to load and execute the executable instructions to perform the information transmission method in various aspects as described above.

According to another aspect of embodiments of the disclosure, a second device is provided. The second device includes a processor, a transceiver connected to the processor, and a memory configured to store executable instructions for the processor. The processor is configured to load and execute the executable instructions to perform the information transmission method in various aspects as described above.

According to another aspect of embodiments of the disclosure, a computer-readable storage medium is provided. The computer-readable storage medium stores at least one instruction, at least one program, a code set, or an instruction set. The at least one instruction, the at least one program, the code set, or the instruction set is loaded and executed by a processor to perform the information transmission method in various aspects as described above.

According to another aspect of embodiments of the disclosure, a computer program product or computer program is provided. The computer program product or computer program includes computer instructions. The computer instructions are stored in a computer-readable storage medium. A processor reads the computer instructions from the computer-readable storage medium and executes the computer instructions, to cause a first device or a second device to perform the information transmission method in various aspects as described above.

The technical solution provided in embodiments of the disclosure may have the following beneficial effects.

In the disclosure, the first device performs the transmission-related operation on the AI information and/or the at least one data block associated with the AI information and/or the AI information data packet associated with the at least one data block associated with the AI information. The at least one data block is obtained by dividing the AI information. The AI information is information related to the AI/ML model. In this way, block-wise transmission of the information related to the AI/ML model is realized, and the transmission-related operation can be performed on separate data blocks, thereby improving the transmission efficiency, the transmission reliability, and the transmission flexibility of the information related to the AI/ML model.

### BRIEF DESCRIPTION OF THE DRAWINGS

In order to describe more clearly technical solutions in embodiments of the disclosure, the following will give a brief introduction to the accompanying drawings used for describing embodiments. Apparently, the accompanying drawings described below are merely some embodiments of the disclosure. Based on these drawings, those of ordinary skill in the art can also obtain other drawings without creative effort.
FIG. 1 is a schematic diagram of a network architecture provided in an exemplary embodiment of the disclosure.
FIG. 2 is a schematic diagram of a network system architecture provided in an exemplary embodiment of the disclosure.
FIG. 3 is a flowchart of an information transmission method provided in an exemplary embodiment of the disclosure.
FIG. 4 is a flowchart of an information transmission method provided in an exemplary embodiment of the disclosure.
FIG. 5 is a flowchart of an information transmission method provided in an exemplary embodiment of the disclosure.
FIG. 6 is a block diagram of an information transmission apparatus provided in an exemplary embodiment of the disclosure.
FIG. 7 is a block diagram of an information transmission apparatus provided in an exemplary embodiment of the disclosure.
FIG. 8 is a schematic structural diagram of a first device or a second device provided in an exemplary embodiment of the disclosure.

### DETAILED DESCRIPTION

In order to make the objectives, technical solutions, and advantages of the disclosure clearer, embodiments of the disclosure will be further described in detail below with reference to the accompanying drawings.

Exemplary embodiments will be described in detail herein, and examples of these embodiments are illustrated in the accompanying drawings. When the following descriptions relate to the accompanying drawings, unless otherwise stated, the same numerals in different accompanying drawings refer to the same or similar elements. The embodiments described in the following exemplary embodiments are not intended to represent all embodiments consistent with the embodiments of the disclosure. Instead, they are merely examples of apparatuses and methods consistent with some aspects of the disclosure as elaborated in the appended claims.

The terms used in the disclosure are merely intended for describing the particular embodiments, rather than limiting the disclosure. The singular form "a/an", "said", "above", and "the" used in the disclosure and the appended claims are also intended to include multiple forms, unless otherwise specified in the context. It may be also understood that, the term "and/or" used herein refers to any or all of possible combinations of one or more associated items that are listed.

It may be noted that, user information (including, but not limited to, user equipment information, user personal information, etc.) and data (including, but not limited to, data for analysis, stored data, displayed data, etc.) involved in the disclosure are all information and data authorized by the user or fully authorized by all parties, and the collection, use, and processing of related data shall comply with the related laws, regulations, and standards of the related countries and regions.

It may be understood that, although the terms "first", "second", and the like may be used in the disclosure to describe various information, such information will not be limited to these terms. These terms are merely used for distinguishing the same type of information from each other. For example, without departing from the scope of the disclosure, a first parameter may be also referred to as a second parameter, and similarly, the second parameter may be also referred to as the first parameter, depending on the context. For example, the word "if" used herein may be interpreted as "at...", or "when...", or "in response to a determination".

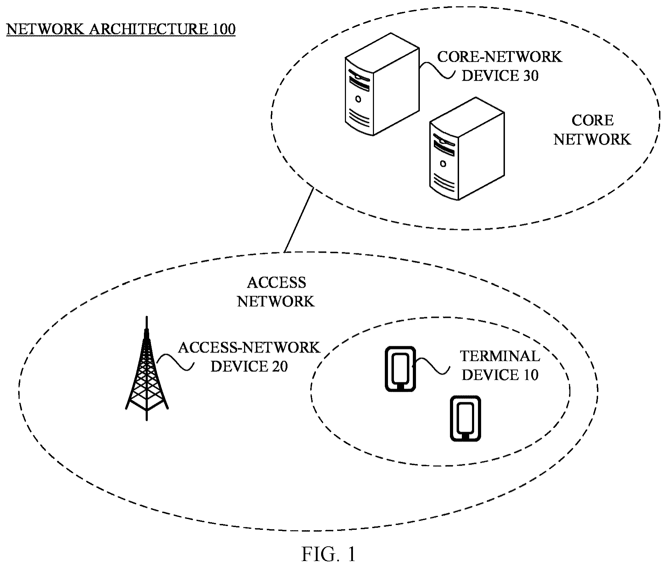

FIG. 1 is a schematic diagram of a network architecture 100 provided in an exemplary embodiment of the disclosure. The network architecture 100 includes a terminal device 10, an access-network device 20, and a core-network device 30.

The terminal device 10 may refer to a user equipment (UE), an access terminal, a subscriber unit, a subscriber station, a mobile station, a remote station, a remote terminal, a mobile device, a wireless communication device, a user agent, or a user device. Optionally, the terminal device 10 may be also a cellular radio telephone, a cordless telephone, a session initiation protocol (SIP) telephone, a wireless local loop (WLL) station, a personal digital assistant (PDA), a device with wireless communication functions such as a handheld device, a computing device, or other processing devices coupled with a wireless modem, an in-vehicle device, a wearable device, a terminal device in the 5th generation system (5GS), or a terminal device in a future evolved public land mobile network (PLMN), or the like. Embodiments of the disclosure are not limited in this regard. For the convenience of illustration, the above devices are collectively referred to as the "terminal device". The number of terminal devices 10 is usually multiple, and there may be one or more terminal devices 10 in each cell managed by the access-network device 20.

The access-network device 20 is a device deployed in an access network to provide a wireless communication function for the terminal device 10. The access-network device 20 may include various forms of macro base stations, micro base stations, relay stations, access points, and the like. In systems adopting different radio access technologies, devices having a function of the access-network device may be in different names, for example, in a 5G new radio (NR) system, such a device is referred to as a gNodeB or a gNB. With evolution of communication technologies, the name "access-network device" may change. For the convenience of illustration, in embodiments of the disclosure, the above apparatus for providing a wireless communication function for the terminal device 10 is collectively referred to as the "access-network device". Optionally, via the access-network device 20, the terminal device 10 and the core-network device 30 can establish a communication relationship. Exemplarily, in a long term evolution (LTE) system, the access-network device 20 may be an evolved universal terrestrial radio access network (EUTRAN) or one or more evolutional Node B (eNB or eNodeB) in the EUTRAN; and in the 5G NR system, the access-network device 20 may be a radio access network (RAN) or one or more gNBs in the RAN. In embodiments of the disclosure, unless otherwise specified, a network device refers to the access-network device 20, such as a base station.

The core-network device 30 is a device deployed in a core network. The functions of the core-network device 30 are mainly to provide a user connection, manage a user, and complete service bearing, and the core-network device 30 is used as an interface provided by a bearer network for an external network. For example, the core-network device in the 5G NR system may include an access and mobility management function (AMF) network element, a user plane function (UPF) network element, a session management function (SMF) network element, and the like.

In some embodiments, the access-network device 20 and the core-network device 30 communicate with each other by using some air interface technology, such as an NG interface in the 5G NR system. The access-network device 20 and the terminal device 10 communicate with each other by using some air interface technology, such as a Uu interface.

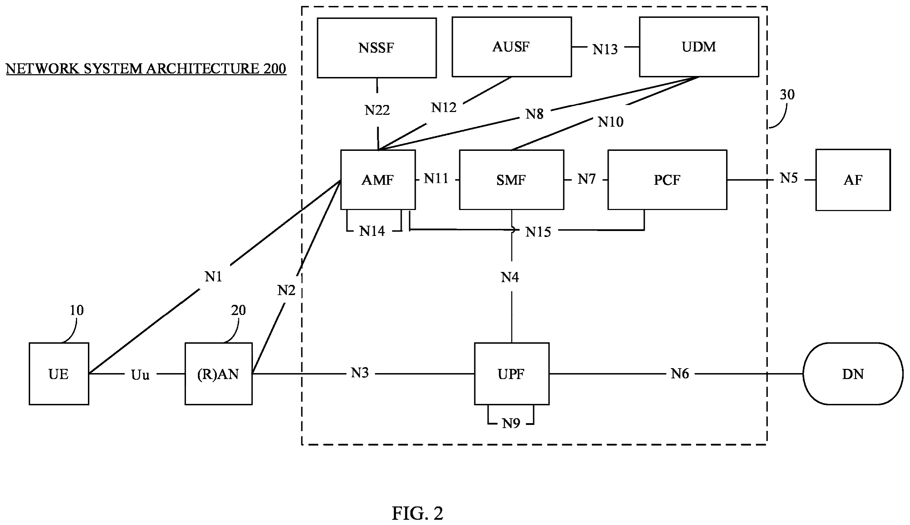

FIG. 2 is a schematic diagram of a network system architecture 200 provided in an exemplary embodiment of the disclosure. The network system architecture 200 includes a terminal device 10, an access-network device 20, and a core-network device 30.

The core-network device 30 includes a network slice selection function (NSSF), an authentication server function (AUSF), a unified data management (UDM), an AMF, an SMF, a policy control function (PCF), a UPF, and a sensing function (SF).

A UE performs access stratum (AS) connection with an access network (AN) through a Uu interface, to exchange AS messages and perform wireless data transmission. The UE performs non-access stratum (NAS) connection with the AMF through an N1 interface, to exchange NAS messages. The AMF is a mobility management function in a core network, and the SMF is a session management function in the core network. In addition to the mobility management for the UE, the AMF is also responsible for forwarding a session management-related message between the UE and the SMF. The PCF is a policy management function in the core network and is responsible for formulating policies related to mobility management, session management, and charging for the UE. The PCF performs data transmission with an external application function (AF) through an N5 interface. The UPF is a user plane function in the core network, performs data transmission with an external data network (DN) through an N6 interface, and performs data transmission with the AN through an N3 interface.

The "5G NR system" in embodiments of the disclosure may be also referred to as a 5G system or an NR system, but the meaning thereof can be understood by those skilled in the art. The technical solutions described in the embodiments of the disclosure may be applied to an LTE system, or may be applied to the 5G NR system, or may be applied to a future evolved system of the 5G NR system, or may be applied to other communication systems such as a narrow band internet of things (NB-loT) system, which is not limited in the disclosure.

The first device and the second device involved in embodiments of the disclosure satisfy at least one of the following scenarios. Scenario 1: the first device is a terminal device, and the second device is a network device. Scenario 2: the first device is the network device, and the second device is the terminal device. Scenario 3: the first device and the second device each are the terminal device. Scenario 4: the first device and the second device each are the network device. The network device is an access-network device, a core-network device, an AI/ML model related-information management device, or an operation administration and maintenance (OAM) device.

The access-network device includes at least one of: a gNB, a centralized unit (CU), a distributed unit (DU), a centralized unit-control plane (CU-CP), or a centralized unit-user plane (CU-UP).

The core-network device includes at least one of: an NSSF network element, an AMF network element, an AUSF network element, a UPF network element, an SMF network element, a location management function (LMF) network element, a PCF network element, a UDM network element, an SF network element, or a network data analytics (NWDAF) network element.

With the continuous development of artificial intelligence (AI) and machine learning (ML) technologies, a combination of communication technology and AI/ML technology is one of future communication trends. To adapt to the complexity and diversity of a scenario of a communication system, an AI/ML model is introduced in the communication system. Information related to the AI/ML model may contain a large amount of data. In related technologies, the transmission efficiency of the information related to the AI/ML model is low and there are problems such as insufficient transmission flexibility. Therefore, how to improve the transmission efficiency and the transmission flexibility of the information related to the AI/ML model is a problem to be solved.

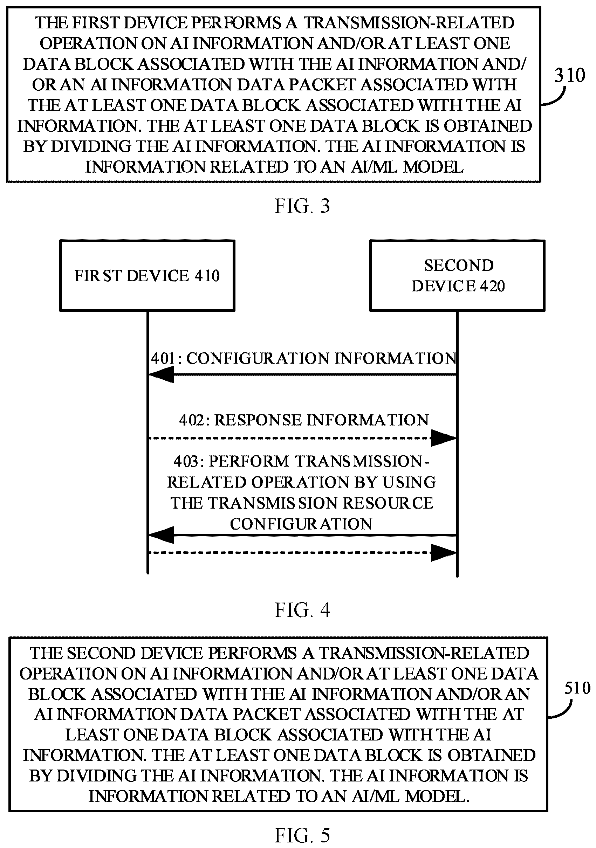

FIG. 3 is a flowchart of an information transmission method provided in an exemplary embodiment of the disclosure. The method is performed by a first device and at least includes the following.

At 310, the first device performs a transmission-related operation on AI information and/or at least one data block associated with the AI information and/or an AI information data packet associated with the at least one data block associated with the AI information. The at least one data block is obtained by dividing the AI information. The AI information is information related to an AI/ML model.

In the disclosure, no distinction is made between the meanings of AI information, model-related data, AI/ML model-related data, information related to an AI/ML model, AI/ML model-related information, model-related information, AI/ML model data, and model data. For the specific meaning of AI information, please refer to the introduction below.

In some embodiments, the AI model and the ML model are considered as parallel concepts. In some embodiments, the AI model and the ML model are considered as hypernym and hyponym concepts, and the ML model is a subtype of the AI model.

In some embodiments, before transmitting AI information and/or at least one data block associated with the AI information and/or an AI information data packet associated with the at least one data block associated with the AI information, a second device divides the AI information into at least one first data block, such as multiple first data blocks. Each of the at least one first data block is associated with a data block identifier (ID). Each first data block is further divided into one or more AI information data packets for transmission. Each AI information data packet is associated with a data block ID.

In other embodiments, before transmitting AI information and/or at least one data block associated with the AI information and/or an AI information data packet associated with the at least one data block associated with the AI information, the second device divides the AI information or at least one data block associated with the AI information into one or more AI information data packets. Each AI information data packet is associated with a data block ID. Different AI information data packets may be associated with the same data block ID or different the data block IDs. The second device transmits one or more AI information data packets associated with a data block ID to the first device.

When the AI information is transmitted between the first device and the second device, the transmission-related operation may be performed based on different granularities, for example, based on at least one of AI information granularity, data block granularity, or AI information data packet granularity.

In some embodiments, the transmission-related operation includes at least one of: (1) a reorganization operation; (2) a retransmission operation; (3) a resume operation; (4) an update operation; or (5) a new transmission or initial transmission operation.

For operation (1), the reorganization operation is a basic operation. The new transmission operation, the retransmission operation, the resume operation, the update operation, and other operations of AI information all involve the reorganization operation of the AI information. The reorganization operation can be understood as at least one of the following three meanings. Meaning 1: Received AI information data packets are reorganized according to packet number information. In one implementation, the first device (data receiver) can obtain complete AI information or a part of the complete AI information by reorganizing newly received AI information data packets and store the data thereof. In another implementation, if the first device obtains complete AI information or a part of the complete AI information by reorganizing newly received AI information data packets, and has already stored the complete AI information or a part of the complete AI information, the first device needs to further reorganize, merge, or replace the AI information to obtain the complete AI information or a part of the complete AI information and store the data thereof. Meaning 2: All received AI information data packets associated with the same data block ID are reorganized to obtain at least one first data block and the data thereof is stored. Meaning 3: All received AI information data packets associated with the same data block ID are reorganized to obtain at least one first data block, and then the at least one first data block is reorganized. For example, data blocks are reorganized according to data block ID information associated with each first data block. In one implementation, the first device (data receiver) can obtain at least one first data block by reorganizing newly received AI information data packets and obtain complete AI information or a part of the complete AI information by reorganizing the obtained at least one first data block and store the data thereof. In another implementation, if the first device obtains complete AI information or a part of the complete AI information or at least one first data block by reorganizing newly received AI information data packets, and has already stored the complete AI information or a part of the complete AI information or at least one first data block, the first device needs to further reorganize, merge, or replace the AI information to obtain the complete AI information or a part of the complete AI information or at least one first data block and store the data thereof.

After the reorganization operation, complete AI information or a part of the AI information or at least one first data block can be obtained.

For operation (2), the retransmission operation is a guarantee operation when data transmission cannot meet requirements and is relatively sensitive to transmission time requirements, for example, compared with the resume operation.

The new transmission operation, the resume operation, the update operation, and other operations of AI information all involve the retransmission operation of the AI information. The core point of the retransmission operation is to let the first device (data receiver) inform the second device (data transmitter) of data information needed to be retransmitted, thereby triggering the second device to retransmit the data information needed to be retransmitted. For the specific meaning and process of the retransmission operation, please refer to the following.

For operation (3), the resume operation is an incremental data transmission operation and is relatively insensitive to transmission time requirements, for example, compared with the retransmission operation.

When one AI information is divided into at least one first data block, one transmission process cannot guarantee successful transmission of all first data blocks due to various possible reasons. For example, the deterioration of channel conditions causes some first data blocks to be transmitted incorrectly or unable to be successfully received or unable to be successfully reorganized after multiple retransmissions. For another example, transmission resources are limited, and other data service transmissions have priorities higher than the AI information data transmission service, which may also cause some first data blocks to be unable to be transmitted on time. Regardless of the reason, the first device (data receiver) cannot reorganize the complete AI information. To avoid retransmitting the whole AI information, the AI information resume operation can be introduced. For the resume operation, only the missed part of the AI information needs to be transmitted. For the specific meaning and process of the resume operation, please refer to the following.

For operation (4), the update operation is similar to the resume operation in that both can realize the incremental data transmission operation of AI information and avoid to transmit the complete AI information again. The most essential difference between the update operation and the resume operation is that the update operation will overwrite the part of the AI information data needed to be updated. For the specific meaning and process of the update operation, please refer to the following.

For operation (5), the new transmission or initial transmission operation is relative to the resume operation or the update operation. The new transmission or initial transmission operation can also be implemented in combination with the reorganization operation and/or the retransmission operation. Usually, no Al information involved in the new transmission is stored by the first device (data receiver) before the new transmission or initial transmission operation.

The following is the meaning and several definitions of AI information data packets.

AI information data packet: AI information generally contains a large amount of information. Before transmission, the AI information needs to be devided. In one implementation, the complete AI information is divided into at least one first data block. Each first data block is further divided into several small data packets. Each small data packet is referred to as an AI information data packet. In another implementation, the AI information is directly divided into one or more small data packets. Each small data packet is referred to as an AI information data packet. Each AI information data packet is associated with a data block ID. Regardless of the dividing manner of the AI information, the information dividing process will introduce additional information. For details, please refer to possible formats of the AI information data packet below.

Possible AI information data packet format 1-1: Any one of AI information data packets includes a first data-packet-number information field and an AI information data field. The first data-packet-number information field includes a first data packet number, and the first data packet number is obtained by numbering AI information data packets without distinguishing between different data blocks. The AI information data field includes all information, part information, or an information segment of the AI information.

Exemplarily, each AI information data packet includes at least two information fields, which are hereinafter represented as information field 1 and information field 2. Information field 1 contains a first data packet number, and information field 2 contains all information, part information, or an information segment of the AI information. The first data packet number contained in information field 1 is defined and valued in a unified numbering manner. That is, no matter how many AI information data packets the complete AI information is divided into, first data packet numbers in these AI information data packets are uniformly numbered, regardless of how many data blocks the complete AI information is divided into. The first data packet number can be simply referred to as number.

For example, one complete AI information is divided into 2000 AI information data packets, and first data packet numbers of these AI information data packets can be uniformly numbered from 1 to 2000 (or 0 to 1999).

Possible AI information data packet format 1-2: Any one of AI information data packets includes a second data-packet-number information field and an AI information data field, where the second data-packet-number information field includes a second data packet number, and the second data packet number is obtained by numbering AI information data packets by distinguishing between different data blocks, and the AI information data field includes all information, part information, or an information segment of the AI information.

Exemplarily, each AI information data packet includes at least two information fields, which are hereinafter represented as information field 1 and information field 2. Information field 1 contains a second data packet number, and information field 2 contains all information, part information, or an information segment of the AI information. The second data packet number contained in information field 1 is defined and valued in a unified numbering manner within the data block ID granularity. That is, the second data packet number contained in information field 1 can only be uniquely distinguished when the data block ID associated with the AI information data packet is determined. Second data packet numbers in AI information data packets associated with different data block IDs may have the same value. The second data packet number can be simply referred to as number.

For example, one complete AI information is divided into three first data blocks, and data block IDs associated with respective first data blocks are 1 to 3 (or 0 to 2) in sequence. The complete AI information is divided into 1000 AI information data packets, where 300 AI information data packets are associated with data block ID1, and the AI information data packets associated with data block ID1 can be uniformly numbered from 1 to 300 (or 0 to 299), 400 AI information data packets are associated with data block ID2, and the AI information data packets associated with data block ID2 can be uniformly numbered from 1 to 400 (or 0 to 399), and 300 AI information data packets are associated with data block ID3, and the AI information data packets associated with data block ID3 can be uniformly numbered from 1 to 300 (or 0 to 299).

Possible AI information data packet format 2-1: Any one of AI information data packets includes a first data-packet-number information field, an AI information data field, and a data block ID information field, where the first data-packet-number information field includes a first data packet number, and the first data packet number is obtained by numbering AI information data packets without distinguishing between different data blocks, the AI information data field includes all information, part information, or an information segment of the AI information, and the data block ID information field includes a data block ID associated with the AI information data packet.

Exemplarily, each AI information data packet includes at least three information fields, which are hereinafter represented as information field 1, information field 2, and information field 3. Information field 1 contains a first data packet number, information field 2 contains all information, part information, or an information segment of the AI information, and information field 3 contains data block ID information. The first data packet number information contained in information field 1 is defined and valued in a unified numbering manner. The definition and value in the unified numbering manner can be referred to the corresponding description in the possible AI information data packet format 1-1 above, which will not be repeated herein.

Possible AI information data packet format 2-2: Any one of AI information data packets includes a second data-packet-number information field, an AI information data field, and a data block ID information field, where the second data-packet-number information field includes a second data packet number, and the second data packet number is obtained by numbering AI information data packets by distinguishing between different data blocks, the AI information data field includes all information, part information, or an information segment of the AI information, and the data block ID information field includes a data block ID associated with the AI information data packet.

Exemplarily, each AI information data packet includes at least three information fields, which are hereinafter represented as information field 1, information field 2, and information field 3. Information field 1 contains a second data packet number, information field 2 contains all information, part information, or an information segment of the AI information, and information field 3 contains data block ID information. The second data packet number information contained in information field 1 is defined and valued in a unified numbering manner within the data block ID granularity. The definition and value in the unified numbering manner within the data block ID granularity can be referred to the corresponding description in the possible AI information data packet format 1-2 above, which will not be repeated herein.

Other possible AI information data packet formats: In addition to various information fields (information fields 1 to 3) defined and listed above, any one of AI information data packets further includes at least one of a model ID information field, a model description information field, a data packet importance level indication information field, or a data packet quality of service (QoS) indication information field, which is not limited in the disclosure. The model ID information field carries model ID information of a AI/ML model to which the AI information data packet belongs. The model description information field carries model description information. The data packet importance level indication information field carries data packet importance level indication information. The data packet QoS indication information field carries data packet QoS indication information.

Data block ID: The data block ID includes at least information field 4. Information field 4 indicates data block number information. Optionally, the data block ID may also include information field 5. Information field 5 includes at least one of model ID information, model description information, a data packet importance level indication information field, or a data packet QoS indication information field. The model ID information is used to identify the AI model. The model description information is used to describe a basic feature, such as the function, the usage, the invocation interface, the model version, the model type, the number of layers, etc. of the AI model. The data packet importance level indication information field carries data packet importance level indication information. The data packet QoS indication information field carries data packet QoS indication information.

FIG. 4 is a flowchart of an information transmission method provided in an exemplary embodiment of the disclosure. The method is performed by a first device 410 and includes the following.

At 401, the first device 410 receives configuration information from a second device 420. The configuration information is used to configure or indicate a transmission resource configuration. The transmission resource configuration is used to configure a transmission resource of AI information and/or at least one data block associated with the AI information and/or at least one AI information data packet associated with the at least one data block associated with the AI information. The transmission resource includes at least one of a new transmission/initial transmission resource, a retransmission resource, a resume resource, or an update resource. The transmission resource includes at least one of a time domain resource, a frequency domain resource, a spatial domain resource, or a code domain resource.

At 402, optionally, the first device 410 transmits response information to the second device 420. The response information is used to confirm that the first device 410 successfully receives the configuration information.

At 403, the first device 410 performs all or part of the transmission-related operation by using the transmission resource configuration transmitted by the second device 420.

Optionally, operations at 403 include the first device 410 transmitting the transmission resource configuration to the second device 420 and performing all or part of the transmission-related operation by using the transmission resource configuration.

The first device 410 includes at least one first functional entity, the first functional entity is included in a first protocol layer, or the first functional entity is a non-protocol layer functional entity. The first protocol layer is any one of a physical (PHY) layer, a media access control (MAC) layer, a backhaul adaptation protocol (BAP) layer, a radio link control (RLC) layer, a packet data convergence protocol (PDCP) layer, a radio resource control (RRC) layer, a service data adaptation protocol (SDAP) layer, a non-access stratum (NAS), an application layer, or a positioning function protocol layer. Alternatively, the first protocol layer is a new protocol layer other than the PHY layer, the MAC layer, the BAP layer, the RLC layer, the PDCP layer, the RRC layer, the SDAP layer, the NAS, the application layer, and the positioning function protocol layer.

The non-protocol layer functional entity indicates that the first functional entity is not a part of the protocol stack function, but is a special functional module independent of the protocol stack, for example, a functional module specifically configured to store and manage AI information, or is referred to as an AI/ML functional entity.

The first functional entity is configured to perform one or more of the following functions: (1.1) associating a received AI information data packet with a data block identifier (ID) corresponding to the AI information data packet; (1.2) performing a first reorganization on received AI information data packets associated with a same data block ID to obtain at least one first data block; (1.3) delivering at least one first data block to a second functional entity; (1.4) performing a second reorganization on at least one first data block to obtain the complete AI information or a part of the AI information; (1.5) performing a third reorganization on received AI information data packets to obtain the complete AI information or a part of the AI information; (1.6) generating a first message and transmitting the first information to a second device, where the first information includes retransmission indication information; (1.7) when a first data block associated with a same AI/ML model ID and a same data block ID exists, replacing the first data block with a latest first data block obtained by reorganization; (1.8) when an AI information data packet associated with a same AI/ML model ID and a same AI information data packet number exists, replacing the AI information data packet with a latest successfully received AI information data packet; (1.9) when AI information associated with a same AI/ML model ID exists, replacing the AI information with latest AI information obtained by reorganization; (1.10) when an AI information data packet associated with a same AI/ML model ID, a same data block ID, and a same AI information data packet number exists, replacing the AI information data packet with a latest successfully received AI information data packet; or (1.11) associating at least one first data block obtained by reorganization with an AI/ML model ID corresponding to the at least one first data block, where each of the at least one first data block is associated with a data block ID. The above functions (1.1) to (1.11) may share a first functional entity, or use different first functional entities respectively, which is not limited in the disclosure.

For function (1.1), function (1.1) is applicable to the possible AI information data packet formats 1-1 and 1-2. For the possible AI information data packet formats 2-1 and 2-2, the data packet definition itself contains data block ID information, and function (1.1) has been implemented through the data packet definition. For the possible AI information data packet formats 1-1 and 1-2, function (1.1) has two possible meanings. Meaning 1 of function (1.1): Add a data block ID information field to each received AI information data packet, where the data block ID information field includes a data block ID associated with the AI information data packet. Meaning 2 of function (1.1): Determine a first association, where the first association indicates an association between the AI information data packet and the data block ID.

Regardless of the above meanings, the first device needs to know the first mapping between the AI information data packet and the data block ID to implement function (1.1). The first mapping is notified to the first device through a dedicated signaling or a pre-configuration process or predefinition or a system broadcast message.

Exemplarily, before transmitting first AI information to the first device, the second device configures radio bearer (RB) 1, RB2, and RB3 to the first device through a reconfiguration message. RB1 to RB3 are all used to transmit the first AI information. The first AI information is divided into three first data blocks corresponding to data block ID1, data block ID2, and data block ID3 respectively. During configuration of RB resources, the RB1 resource is associated with data block 1D1, the RB2 resource is associated with data block ID2, and the RB3 resource is associated with data block ID3. Then, from the perspective of the first device, as long as AI information data packets are received through the RB1 resource, the first device knows that the AI information data packets are associated with data block ID1. The same logic also applies to RB2 and RB3. The implementation of function (1.1) is conducive to the implementation of the model retransmission, resume, update, and other operations.

For function (1.2), function (1.2) is to reorganize received AI information data packets according to the data block ID granularity to obtain at least one first data block, which is applicable to any implementation of the possible AI information data packet formats mentioned above. The implementation of function (1.2) is conducive to the implementation of the model retransmission, resume, update, and other operations.

For function (1.3), a first functional entity configured to perform the first reorganization is the same as or different from a first functional entity configured to perform the second reorganization. In a scenario where they are different functional entities, the first functional entity needs to deliver at least one first data block obtained by successful reorganization to the second functional entity, where the second functional entity is included in a second protocol layer or is a non-protocol layer functional entity.

The second protocol layer is any one of a PHY layer, a MAC layer, a BAP layer, an RLC layer, a PDCP layer, an RRC layer, an SDAP layer, a NAS, an application layer, or a positioning function protocol layer. Alternatively, the second protocol layer is a new protocol layer other than the PHY layer, the MAC layer, the BAP layer, the RLC layer, the PDCP layer, the RRC layer, the SDAP layer, the NAS, the application layer, and the positioning function protocol layer.

The non-protocol layer functional entity indicates that the second functional entity is not a part of the protocol stack function, but is a special functional module independent of the protocol stack, for example, a functional module specifically configured to store and manage AI information, or is referred to as an AI/ML functional entity.

For function (1.4), function (1.4) is generally used in combination with function (1.2) to obtain the complete AI information. If the second functional entity in function (1.3) is the same as the first functional entity, function (1.4) is implemented by the first functional entity. If the second functional entity in function (1.3) is different from the first functional entity, function (1.4) is implemented by the second functional entity.

Optionally, for the model data retransmission, resume, or update operation, the first device (data receiver) may have already stored information of several first data blocks corresponding to the complete AI information before the model data retransmission, resume, or update operation. Then, function (1.4) only needs to reorganize, merge, or replace the information of the several first data blocks already stored in the first device with information of several first data blocks obtained through the model data retransmission, resume, or update operation to obtain the complete AI information. The model data is the abbreviation of AI/ML model data, which can be understood as the entire AI information or at least one data block or at least one AI information data packet.

For function (1.5), the first functional entity or the second functional entity directly reorganizes received AI information data packets to obtain the complete AI information or a part of the complete Al information. Optionally, for the model data retransmission, resume, or update operation, the first device (data receiver) may have already stored information of several first AI information data packets corresponding to the complete AI information before the model data retransmission, resume, or update operation. Then, function (1.5) only needs to reorganize, merge, or replace the information of the several first AI information data packets already stored in the first device with information of several AI information data packets obtained through the model data retransmission, resume, or update operation to obtain the complete AI information.

For function (1.6), the retransmission indication information indicates to the second device at least one of: retransmitting at least one AI information data packet associated with the AI information; retransmitting at least one first data block associated with the AI information; retransmitting at least one AI information data packet associated with at least one first data block associated with the AI information; or retransmitting the AI information.

In some embodiments, the function (1.6) may also be a function included in the second functional entity.

In some embodiments, the first information includes at least one of the following information: (1.1) a radio bearer (RB) ID for which data retransmission is required; (1.2) a session ID for which data retransmission is required; (1.3) an AI/ML model ID for which data retransmission is required; (1.4) a data block ID associated with a first data block for which data retransmission is required; (1.5) start packet number information of an AI information data packet for which data retransmission is required; (1.6) end packet number information of an AI information data packet for which data retransmission is required; (1.7) total packet number information of AI information data packets for which data retransmission is required; (1.8) start data block ID information associated with a first data block for which data retransmission is required; (1.9) end data block ID information associated with a first data block for which data retransmission is required; or (1.10) total block number information of first data blocks for which data retransmission is required.

For information (1.1) to (1.4), information (1.1) to (1.4) are simple identification information. Information (1.1) is used to identify an RB. Information (1.2) is used to identify a session. Information (1.3) is used to identify an AI/ML model. Information (1.4) is used to identify a data block associated with a first data block.

For information (1.5) to (1.7), information (1.5) indicates the start position of an AI information data packet for data retransmission. Information (1.5) itself can be counted within the range of the AI information data packet for data retransmission, or the protocol can stipulate that data retransmission starts from the next AI information data packet of the AI information data packet specified by information (1.5). Information (1.6) indicates the end position of an AI information data packet for data retransmission. Information (1.6) itself can be counted within the range of the AI information data packet for data retransmission, or the protocol can stipulate that the AI information data packet corresponding to information (1.6) is out of the range of the AI information data packet for retransmission. Information (1.7) indicates the total number of AI information data packets for data retransmission. Information (1.7) and information (1.6) are not necessarily mutually exclusive. Information (1.7) and information (1.6) can be used independently or in combination. When used in combination, information (1.7) can be used for data retransmission verification to determine whether the number of retransmitted data packets received is correct.

For information (1.8) to information (1.10), information (1.8) indicates the start position of a first data block for data retransmission. Information (1.8) itself can be counted within the range of the first data block for data retransmission, or the protocol can stipulate that data retransmission starts from the next first data block of the first data block specified by information (1.8). Information (1.9) indicates the end position of a first data block for data retransmission. Information (1.9) itself can be counted within the range of the first data block for data retransmission, or the protocol can stipulate that the first data block corresponding to information (1.9) is out of the range of the first data block for data retransmission. Information (1.10) indicates the total number of first data blocks for data retransmission. Information (1.10) and information (1.9) are not necessarily mutually exclusive. Information (1.10) and information (1.9) can be used independently or in combination. When used in combination, information (1.10) can be used for data retransmission verification to determine whether the number of retransmitted first data blocks received is correct.

In some embodiments, any information included in the first information is generated according to at least one of the following granularities: session ID granularity, model ID granularity, RB ID granularity, or data block ID granularity.

Session ID granularity: One AI information is transmitted through one or more RB resources, and generation of the first information needs to be triggered at the granularity of session ID.

Model ID granularity: One AI information is transmitted through one or more RB resources, and generation of the first information needs to be triggered at the granularity of AI/ML model ID.

RB ID granularity: One AI information is transmitted through one or more RB resources, and for each RB resource or a group of RB resources, generation of the first information thereof can be independently triggered. Information on the grouping of RB resources is obtained through a configuration process.

Data block ID granularity: One AI information is transmitted through one or more RB resources, and generation of the first information needs to be triggered at the granularity of data block ID.

In some embodiments, an event triggering generation of the first information includes at least one of the following. Event 1: A first timer expires and a first reorganization of a first data block associated with the first timer is not completed. Event 2: A second timer expires and a second reorganization of AI information associated with the second timer is not completed. Event 3: A third timer expires and an AI information data packet associated with the third timer is not successfully received. Event 4: A fourth timer expires and a third reorganization of AI information associated with the fourth timer is not completed. Event 5: A fifth timer associated with a first data block expires and no AI information data packet associated with the first data block is received. Event 6: A number of missed intermediate Al information data packets is greater than or equal to a first number threshold. Event 7: A number of missed intermediate AI information data packets is greater than or equal to a second number threshold for a first duration. Event 8: A first request information transmitted by the second device is received.

In some embodiments, for event 1, a start condition of the first timer is successful reception of a first AI information data packet; and/or a stop condition of the first timer is completion of the first reorganization of the first data block associated with the first timer. The first AI information data packet is an AI information data packet with a smallest number among all AI information data packets associated with the first data block associated with the first timer, or an AI information data packet with a largest number among all AI information data packets associated with the first data block associated with the first timer, or a 1st AI information data packet successfully received by the first device among all AI information data packets associated with the first data block associated with the first timer.

In some embodiments, for event 2, a start condition of the second timer is successful reorganization of a first data block with a smallest number associated with the AI information, or successful reorganization of a first data block with a largest number associated with the AI information, or successful reorganization of a 1st first data block associated with the AI information; and/or a stop condition of the second timer is completion of the second reorganization of the AI information associated with the second timer.

In some embodiments, for event 3, a start condition of the third timer is successful reception of an AI information data packet corresponding to a previous packet number of the AI information data packet associated with the third timer; and/or a stop condition of the third timer is successful reception of the AI information data packet associated with the third timer.

In some embodiments, for event 4, a start condition of the fourth timer is successful reception of a second AI information data packet; and/or a stop condition of the fourth timer is completion of the third reorganization of the AI information associated with the fourth timer. The second AI information data packet is an AI information data packet with a smallest number among all AI information data packets associated with the AI information associated with the fourth timer, or an AI information data packet with a largest number among all AI information data packets associated with the AI information associated with the fourth timer, or a 1st AI information data packet successfully received by the first device among all AI information data packets associated with the AI information associated with the fourth timer.

In some embodiments, for event 5, a start condition of the fifth timer is successful reception of a transmission resource configuration corresponding to transmission of an AI information data packet associated with the first data block; and/or a stop condition of the fifth timer is successful reception of a 1st AI information data packet, or successful reception of an AI information data packet with a largest packet number among AI information data packets, or successful reception of an AI information data packet with a smallest packet number among AI information data packets, and the AI information data packet is associated with the first data block.

In some embodiments, for event 6 and event 7, AI information data packets are not always successfully received by the first device in the order of their numbers. For example, the first device has successfully received AI information data packets numbered 1 to 10, and the 11th successfully received Al information data packet corresponds to the number 15. Then, AI information data packets numbered 11, 12, 13, and 14 are considered missed. In this case, the number of missed AI information data packets involved in event 6 is 4. Event 7 is different in that the number of missed AI information data packets not only needs to be greater than or equal to the second numerical threshold, but this also needs to last for the first duration, so that event 7 can be determined to be satisfied.

In some embodiments, for event 8, upon reception of the first request information transmitted by the second device (i.e., data transmitter), generation of the first information is triggered, and optionally, the first information is transmitted to the second device.

At least one of the first timer, the second timer, the third timer, the fourth timer, the fifth timer, the first number threshold, the second number threshold, or the first duration is configured to the first device in at least one of the following manners: pre-definition in a communication protocol; pre-configuration by a network device; default setting; dedicated signaling, which refers to terminal device-dedicated signaling, such as signaling dedicated to the first device; or system broadcast message.

For function (1.7), function (1.7) is mainly for data update operation. For example, the second device is ready to transmit second AI information to the first device, and the second AI information is divided into three first data blocks. The three first data blocks correspond to data block ID1, ID2, and ID3 respectively. In one transmission process, the entire second AI information is successfully received by the first device. In another transmission process (independent of the previous transmission process), the second device hopes to update the first data block corresponding to data block ID2 associated with the second AI information stored by the first device. Once the updated first data block corresponding to data block ID2 associated with the second AI information is successfully received, the first device replaces the previously stored first data block corresponding to the same data block ID associated with the second AI information with the newly received first data block.

Function (1.8), function (1.9), and function (1.10) are similar to function (1.7), and are mainly for data update operation, which will not be repeated herein.

For function (1.11), to facilitate the management of at least one first data block, such as the model data retransmission, resume, or update operation based the data block, the at least one first data block obtained by reorganization needs to be associated with the AI/ML model ID corresponding to the at least one first data block.

In some embodiments, the first functional entity is configured according to at least one of the following granularities: session ID granularity, model ID granularity, data block ID granularity, or RB ID granularity.

Session ID granularity: One AI information is transmitted through one or more session resources. Each session is associated with one or more RB resources. All RB resources associated with the same session are associated with the same first functional entity. In this case, the first functional entity is considered to be configured according to the session ID granularity.

Model ID granularity: One AI information is associated with one AI/ML model ID and transmitted through one or more RB resources. All RB resources associated with each AI/ML model ID are associated with the same first functional entity. In this case, the first functional entity is considered to be configured according to the model ID granularity.

Data block ID granularity: One AI information is divided into several first data blocks and transmitted through one or more RB resources. Each RB ID is associated with one data block ID or a group of data block IDs (that is, one RB resource is used to transmit one first data block or a group of first data blocks). Each data block ID or each group of data block IDs is associated with one first functional entity. In this case, the first functional entity is considered to be configured according to the RB ID granularity and the data block ID granularity.

RB ID granularity: One AI information is transmitted through one or more RB resources. One RB resource or a group of RB resources associated with each set of AI information is associated with the same first functional entity. In this case, the first functional entity is considered to be configured according to the RB ID granularity.

There are many other granularity combination implementations for the configuration of the first functional entity, which is not limited in the disclosure.

In some embodiments, the second functional entity is configured to perform at least one of the following functions: performing a second reorganization on at least one first data block to obtain the complete AI information or a part of the AI information; generating a first message and transmitting the first information to a second device, where the first information includes retransmission indication information; when a first data block associated with a same AI/ML model ID and a same data block ID exists, replacing the first data block with a latest first data block obtained by reorganization; when an AI information data packet associated with a same AI/ML model ID and a same AI information data packet number exists, replacing the AI information data packet with a latest successfully received AI information data packet; when AI information associated with a same AI/ML model ID exists, replacing the AI information with latest AI information obtained by reorganization; when an AI information data packet associated with a same AI/ML model ID, a same data block ID, and a same AI information data packet number exists, replacing the AI information data packet with a latest successfully received AI information data packet; or associating at least one first data block obtained by reorganization with an AI/ML model ID corresponding to the at least one first data block.

In some embodiments, the second functional entity and the first functional entity are the same functional entity. In other embodiments, the second functional entity and the first functional entity are different functional entities. For specific implementation details of the functions performed by the second functional entity, please refer to the first functional entity, which is not repeated herein.

In some embodiments, the first device performs all or part of the transmission-related operation on the AI information and/or the at least one data block associated with the AI information and/or the AI information data packet associated with the at least one data block associated with the AI information by using a transmission resource configuration transmitted by a second device.

In some embodiments, the first device performs all or part of the transmission-related operation on the AI information and/or the at least one data block associated with the AI information and/or the AI information data packet associated with the at least one data block associated with the AI information by using a transmission resource configuration transmitted to a second device.

In some embodiments, the transmission resource configuration includes at least one of the following information: (2.1) an AI/ML model ID associated with AI information to be transmitted; (2.2) session ID information associated with AI information to be transmitted; (2.3) a data block ID associated with a first data block to be transmitted; (2.4) packet number information associated with a last AI information data packet associated with AI information to be transmitted; (2.5) packet number information associated with a 1st AI information data packet associated with AI information to be transmitted; (2.6) total packet number information of AI information data packets associated with Al information to be transmitted; (2.7) an end data block ID associated with a first data block associated with AI information to be transmitted; (2.8) a start data block ID associated with a first data block associated with AI information to be transmitted; (2.9) total block number information of first data blocks associated with AI information to be transmitted; (2.10) whether data retransmission of AI information is supported; (2.11) whether transmitting first information is supported, where the first information includes retransmission indication information; or (2.12) at least one RB ID information.

For information (2.1), all information or part information of one AI information is generally transmitted through one or more RB resources. Therefore, in the transmission resource configuration, one AI/ML model ID is associated with one or more RB IDs.

For information (2.2), data transmission generally relies on sessions for resource configuration and management. In the transmission resource configuration, one session ID is associated with one or more RB IDs.

For information (2.3), information (2.3) contains a data block ID associated with at least one first data block, and one data block ID or a group of data block IDs or all data block IDs are associated with one RB resource.

For information (2.4), information (2.4) is configured according to at least one of the following granularities: session ID granularity, model ID granularity, data block ID granularity, or RB ID granularity.

Different possible implementations are given below for illustration.

### Implementation 1: configured according to the session ID granularity or the model ID granularity

The second device configures RB1 to RB3 for the first device through the transmission resource configuration. RB1, RB2, and RB3 are all used for transmission of AI information associated with AI/ML model ID1. Assume that the AI information associated with AI/ML model ID1 is divided into 8888 AI information data packets by the second device, and the AI information data packets are numbered from 0, then the packet number associated with the last AI information data packet corresponding to the AI information associated with AI/ML model ID1 is 8887.

### Implementation 2: configured according to the RB ID granularity

The second device configures RB1 to RB3 for the first device through the transmission resource configuration. RB1, RB2, and RB3 are all used for transmission of AI information associated with AI/ML model ID1. Assume that the AI information associated with AI/ML model ID1 is divided into 7000 AI information data packets by the second device, and the AI information data packets are numbered from 0, where AI information data packets numbered 0 to 1999 are transmitted through RB1, AI information data packets numbered 2000 to 4999 are transmitted through RB2, and AI information data packets numbered 5000 to 6999 are transmitted through RB3. Then, the value of information (2.4) associated with RB1 is 1999, the value of information (2.4) associated with RB2 is 4999, and the value of information (2.4) associated with RB3 is 6999.

### Implementation 3: configured according to the data block ID granularity

The second device configures RB1 to RB3 for the first device through the transmission resource configuration. RB1, RB2, and RB3 are all used for transmission of AI information associated with AI/ML model ID1. Assume that the AI information associated with AI/ML model ID1 is divided into 7000 AI information data packets by the second device, and the AI information data packets are numbered from 0, where AI information data packets numbered 0 to 1999 are associated with data block ID1 (that is, the first data block associated with data block ID1 includes AI information data packets numbered 0 to 1999), AI information data packets numbered 2000 to 4999 are associated with data block ID2, and AI information data packets numbered 5000 to 6999 are associated with data block ID3. Then, the value of information (2.4) associated with data block ID1 is 1999, the value of information (2.4) associated with data block ID2 is 4999, and the value of information (2.4) associated with data block ID3 is 6999.

### Implementation 4: configured according to the RB ID granularity and the data block ID granularity

The second device configures RB1 to RB3 for the first device through the transmission resource configuration. RB1, RB2, and RB3 are all used for transmission of AI information associated with AI/ML model ID1. Assume that the AI information associated with AI/ML model ID1 is divided into 7000 AI information data packets by the second device, and the AI information data packets are numbered from 0, where AI information data packets numbered 0 to 1999 are associated with data block ID1 (that is, the first data block associated with data block ID1 includes AI information data packets numbered 0 to 1999) and are transmitted through the RB1 resource, AI information data packets numbered 2000 to 4999 are associated with data block ID2 and are transmitted through the RB2 resource, and AI information data packets numbered 5000 to 6999 are associated with data block ID3 and are transmitted through the RB3 resource. Then, the value of information (2.4) associated with data block ID1 associated with RB1 ID is 1999, the value of information (2.4) associated with data block ID2 associated with RB2 ID is 4999, and the value of information (2.4) associated with data block ID3 associated with RB3 ID is 6999.

There are many other granularity combination implementations for information (2.4), which is not limited in the disclosure.

For information (2.5), information (2.5) is configured according to at least one of the following granularities: session ID granularity, model ID granularity, data block ID granularity, or RB ID granularity.

For example, information (2.5) is configured according to the RB ID granularity and the data block ID granularity.

The second device configures RB1 to RB3 for the first device through the transmission resource configuration. RB1, RB2, and RB3 are all used for transmission of AI information associated with AI/ML model ID1. Assume that the AI information associated with AI/ML model ID1 is divided into 7000 AI information data packets by the second device, and the AI information data packets are numbered from 0, where AI information data packets numbered 0 to 1999 are associated with data block ID1 (that is, the first data block associated with data block ID1 includes AI information data packets numbered 0 to 1999) and are transmitted through the RB1 resource, AI information data packets numbered 2000 to 4999 are associated with data block ID2 and are transmitted through the RB2 resource, and AI information data packets numbered 5000 to 6999 are associated with data block ID3 and are transmitted through the RB3 resource. Then, the value of information (2.5) associated with data block ID1 associated with RB1 ID is 0, the value of information (2.5) associated with data block ID2 associated with RB2 ID is 2000, and the value of information (2.5) associated with data block ID3 associated with RB3 ID is 5000.

Similar to information (2.4), there are many other granularity combination implementations for information (2.5), which is not limited in the disclosure.

For information (2.6), information (2.6) is configured according to at least one of the following granularities: session ID granularity, model ID granularity, data block ID granularity, or RB ID granularity.

Information (2.6) indicates the total amount of transmitted AI information data packets through the total packet number information and indirectly controls the AI information reorganization process of the first device. For example, information (2.6) is configured according to the RB ID granularity and the data block ID granularity.

The second device configures RB1 to RB3 for the first device through the transmission resource configuration. RB1, RB2, and RB3 are all used for transmission of AI information associated with AI/ML model ID1. Assume that the AI information associated with AI/ML model ID1 is divided into 7000 AI information data packets by the second device, and the AI information data packets are numbered from 0, where AI information data packets numbered 0 to 1999 are associated with data block ID1 (that is, the first data block associated with data block ID1 includes AI information data packets numbered 0 to 1999) and are transmitted through the RB1 resource, AI information data packets numbered 2000 to 4999 are associated with data block ID2 and are transmitted through the RB2 resource, and AI information data packets numbered 5000 to 6999 are associated with data block ID3 and are transmitted through the RB3 resource. Then, the value of information (2.6) associated with data block ID1 associated with RB1 ID is 2000, the value of information (2.6) associated with data block ID2 associated with RB2 ID is 3000, and the value of information (2.6) associated with data block ID3 associated with the RB3 ID is 2000.

Similar to information (2.4), there are many other granularity combination implementations for information (2.6), which is not limited in the disclosure.

For information (2.7), information (2.7) is configured according to at least one of the following granularities: session ID granularity, model ID granularity, or RB ID granularity.

For example, information (2.7) is configured according to the RB ID granularity and the model ID granularity.

The second device configures RB1 to RB3 for the first device through the transmission resource configuration. RB1, RB2, and RB3 are all used for transmission of AI information associated with AI/ML model ID1. Assume that the AI information associated with AI/ML model ID1 is divided into 7 first data blocks by the second device, and data block IDs corresponding to the 7 first data blocks are ID1, ID2, ..., and ID7 in sequence, where first data blocks associated with ID1 and ID2 are transmitted through the RB1 resource, first data blocks associated with ID3, ID4, and ID5 are transmitted through the RB2 resource, and first data blocks associated with ID6 and ID7 are transmitted through the RB3 resource. Then, the value of information (2.7) associated with RB1 ID associated with AI/ML model ID1 is ID2, the value of information (2.7) associated with RB2 ID associated with AI/ML model ID1 is ID5, and the value of information (2.7) associated with RB3 ID associated with AI/ML model ID1 is ID7.

Similar to information (2.4), there are many other granularity combination implementations for information (2.7), which is not limited in the disclosure.

For information (2.8), information (2.8) is configured according to at least one of the following granularities: session ID granularity, model ID granularity, or RB ID granularity.

For example, information (2.8) is configured according to the RB ID granularity and the model ID granularity.

The second device configures RB1 to RB3 for the first device through the transmission resource configuration. RB1, RB2, and RB3 are all used for transmission of AI information associated with AI/ML model ID1. Assume that the AI information associated with AI/ML model ID1 is divided into 7 first data blocks by the second device, and data block IDs corresponding to the 7 first data blocks are ID1, ID2, ..., and ID7 in sequence, where first data blocks associated with ID1 and ID2 are transmitted through the RB1 resource, first data blocks associated with ID3, ID4, and ID5 are transmitted through the RB2 resource, and first data blocks associated with ID6 and ID7 are transmitted through the RB3 resource. Then, the value of information (2.8) associated with RB1 ID associated with AI/ML model 1D1 is 1D1, the value of information (2.8) associated with RB2 ID associated with AI/ML model ID1 is ID3, and the value of information (2.8) associated with RB3 ID associated with AI/ML model ID 1 is ID6.

Similar to information (2.4), there are many other granularity combination implementations for information (2.8), which is not limited in the disclosure.

For information (2.9), information (2.9) is configured according to at least one of the following granularities: session ID granularity, model ID granularity, or RB ID granularity.

For example, information (2.9) is configured according to the RB ID granularity and the model ID granularity.

The second device configures RB1 to RB3 for the first device through the transmission resource configuration. RB1, RB2, and RB3 are all used for transmission of AI information associated with AI/ML model ID1. Assume that the AI information associated with AI/ML model ID1 is divided into 7 first data blocks by the second device, and data block IDs corresponding to the 7 first data blocks are ID1, ID2, ..., and ID7 in sequence, where first data blocks associated with ID1 and ID2 are transmitted through the RB1 resource, first data blocks associated with ID3, ID4, and ID5 are transmitted through the RB2 resource, and first data blocks associated with ID6 and ID7 are transmitted through the RB3 resource. Then, the value of information (2.9) associated with RB1 ID associated with AI/ML model ID1 is 2, the value of information (2.9) associated with RB2 ID associated with AI/ML model ID1 is 3, and the value of information (2.9) associated with RB3 ID associated with AI/ML model ID1 is 2.

Similar to information (2.4), there are many other granularity combination implementations for information (2.9), which is not limited in the disclosure.

For information (2.10) and information (2.11), information (2.10) and information (2.11) are used to enable a model data transmission/retransmission function. Information (2.10) indicates whether the first device supports data retransmission of AI information. Information (2.1 1) indicates whether the first device supports transmitting first information, where the first information includes retransmission indication information.

For information (2.12), AI information is transmitted through one or more RB resources, and the at least one RB ID information indicates the corresponding RB resource. These RB resources are used for transmission of AI information.

The transmission resource configuration is applicable to at least one of operations (1) to (5) above, for example, implementing the initial transmission, retransmission, resume, or update of information contained in any first data block associated with a certain AI/ML model ID, implementing the initial transmission, retransmission, resume, or update of several data packets associated with a certain AI/ML model ID, or implementing the initial transmission, retransmission, resume, or update of several data packets contained in any first data block associated with a certain AI/ML model ID.

In some embodiments, all information or part information in the transmission resource configuration is configured according to at least one of the following granularities: session ID granularity, model ID granularity, data block ID granularity, or RB ID granularity.

In some embodiments, the first device receives configuration information from the second device, where the configuration information is used to configure or indicate the transmission resource configuration.

In some embodiments, the first device transmits response information to the second device, where the response information is used to confirm successful reception of the configuration information.

In some embodiments, the first device transmits a model data transmission request message to a second device. The model data transmission request message includes at least one of the following information: AI/ML model ID information associated with AI information expected to be transmitted; data block ID information associated with AI information expected to be transmitted; packet number information associated with a last AI information data packet associated with AI information expected to be transmitted; packet number information associated with a 1st AI information data packet associated with AI information expected to be transmitted; packet number information associated with at least one AI information data packet associated with AI information expected to be transmitted; end data block ID information associated with a first data block associated with AI information expected to be transmitted; start data block ID information associated with a first data block associated with AI information expected to be transmitted; or data block ID information associated with at least one first data block associated with AI information expected to be transmitted.

The model data transmission request message is applicable to at least one of operations (1) to (5) above, for example, requesting the initial transmission, retransmission, resume, or update of information contained in any first data block associated with a certain AI/ML model ID, requesting the initial transmission, retransmission, resume, or update of several data packets associated with a certain AI/ML model ID, or requesting the initial transmission, retransmission, resume, or update of several data packets contained in any first data block associated with a certain AI/ML model ID.

In some embodiments, all information or part information in the model data transmission request message is generated according to at least one of the following granularities: session ID granularity, model ID granularity, data block ID granularity, or RB ID granularity.

In conclusion, according to the method provided in embodiments, data retransmission of AI/ML model data at different granularities is realized by performing the transmission-related operation on the AI information and/or the at least one data block associated with the AI information and/or the AI information data packet associated with the at least one data block associated with the AI information, thereby increasing the flexibility of the retransmission mechanism of the AI/ML model data, realizing partial transmission and partial update of the AI/ML model data, avoiding a situation where only the complete AI/ML model data can be transmitted in each operation, and improving the transmission efficiency and the transmission flexibility of the AI/ML model data.

FIG. 5 is a flowchart of an information transmission method provided in an exemplary embodiment of the disclosure. The method is performed by a second device and at least includes the following.

At 510, the second device performs a transmission-related operation on AI information and/or at least one data block associated with the AI information and/or an AI information data packet associated with the at least one data block associated with the AI information. The at least one data block is obtained by dividing the AI information. The AI information is information related to an AI/ML model.

In some embodiments, the AI model and the ML model are considered as parallel concepts. In some embodiments, the AI model and the ML model are considered as hypernym and hyponym concepts, and the ML model is a subtype of the AI model.

In some embodiments, the transmission-related operation includes: (1) a dividing operation; (2) a retransmission operation; (3) a resume operation; (4) an update operation; or (5) a new transmission or initial transmission operation.

For operation (1), Al information generally contains a large amount of information. Before transmission, the AI information needs to be divided. In one implementation, the complete AI information is divided into at least one first data block. Each first data block is further divided into several small data packets. Each small data packet is referred to as an AI information data packet. In another implementation, the AI information is directly divided into one or more small data packets. Each small data packet is referred to as an AI information data packet. Each AI information data packet is associated with a data block ID.

For specific implementation details of operations (2) to (5), please refer to operations (2) to (5) on the first device side, which will not be repeated herein.

The second device includes at least one third functional entity, and the third functional entity is configured to perform one or more of the following functions: (2.1) dividing the AI information into at least one first data block; (2.2) dividing a first data block into at least one AI information data packet; (2.3) dividing the AI information into at least one AI information data packet; (2.4) passing an AI information data packet to a lower protocol layer, another protocol layer, or another functional entity in a same protocol layer; (2.5) receiving first information, where the first information includes retransmission indication information; or (2.6) triggering AI information data retransmission according indication of first information.

For functions (2.1) to (2.3), for function (2.1), the complete AI information is divided into at least one first data block. The dividing can be performed according to the amount of data. For example, each first data block contains the same amount of data, where each is 1 gigabyte (GB). Alternatively, the dividing can be performed according to functions of the AI/ML model. For example, different first data blocks are used to transmit data corresponding to AI/ML models with different functions. Alternatively, the dividing can be performed according to the network structure of the neural network. For example, different first data blocks are used to transmit different neural network layers. For example, if one AI model includes 36 cascaded neural network layers, the AI information can be divided into 36 first data blocks.

There are many other manners to divide AI information, which is not limited in the disclosure.

Functions (2.1) to (2.3) are dividing functions at different granularities. In one implementation, the AI information is divided into at least one first data block, each first data block is further divided into several small data packets, and each small data packet is referred to as an AI information data packet. In another implementation, the AI information is directly divided into one or more small data packets, each small data packet is referred to as an AI information data packet, and each AI information data packet is associated with a data block ID.

For the specific dividing manner of functions (2.2) and (2.3), please refer to function (2.1), which will not be repeated herein.

For function (2.4), at least one of the following different implementations is provided.

### Implementation 1: pass the AI information data packet to a lower protocol layer

The third functional entity is included in any one of a PHY layer, a MAC layer, a BAP layer, an RLC layer, a PDCP layer, an RRC layer, an SDAP layer, a NAS, an application layer, or a positioning function protocol layer. Alternatively, the third functional entity is included in a new protocol layer other than the PHY layer, the MAC layer, the BAP layer, the RLC layer, the PDCP layer, the RRC layer, the SDAP layer, the NAS, the application layer, and the positioning function protocol layer. The protocol layer includes the third functional entity, and the protocol layer is at any position above the PHY layer of the protocol stack. For example, the protocol layer is between the PDCP layer and the SDAP layer, or between the PDCP layer and the NAS, which is not limited in the disclosure.

### Implementation 2: pass the AI information data packet to another protocol layer

The third functional entity is not a part of the protocol layer function, or the third functional entity is a non-protocol layer functional entity. In this implementation, the third functional entity is not a part of the protocol stack function, but there is information exchange between the third functional entity and the protocol layer in the protocol stack. If a new protocol layer is defined in the future communication system, the third functional entity may also exchange at least one AI information data packet with the future-defined protocol layer, which is not limited in the disclosure.

### Implementation 3: pass the AI information data packet to another functional entity in the same protocol layer

The third functional entity is included in any one of a PHY layer, a MAC layer, a BAP layer, an RLC layer, a PDCP layer, an RRC layer, an SDAP layer, a NAS, an application layer, or a positioning function protocol layer. Alternatively, the third functional entity is included in a new protocol layer other than the PHY layer, the MAC layer, the BAP layer, the RLC layer, the PDCP layer, the RRC layer, the SDAP layer, the NAS, the application layer, and the positioning function protocol layer.

In this implementation, the third functional entity is a part of the protocol stack function, and the protocol layer including the third functional entity also includes other functional entities or modules. These functional entities or modules can process or handle AI information data packets. For example, the MAC layer includes a retransmission functional entity that can process AI information data packets.

The lower protocol layer or the same protocol layer or the other protocol layer is any one of a PHY layer, a MAC layer, a BAP layer, an RLC layer, a PDCP layer, an RRC layer, an SDAP layer, a NAS, an application layer, or a positioning function protocol layer. Alternatively, the lower protocol layer or the same protocol layer or the other protocol layer is a new protocol layer other than the PHY layer, the MAC layer, the BAP layer, the RLC layer, the PDCP layer, the RRC layer, the SDAP layer, the NAS, the application layer, and the positioning function protocol layer.

For functions (2.5) and (2.6), in some embodiments, the retransmission indication information indicates to the second device at least one of: (3.1) retransmitting at least one AI information data packet associated with the AI information; (3.2) retransmitting at least one first data block associated with the AI information; (3.3) retransmitting at least one AI information data packet associated with at least one first data block associated with the AI information; or (3.4) retransmitting the AI information.

For information (3.1), the second device retransmits at least one AI information data packet associated with the AI information according to the retransmission indication information. For information (3.2), the second device retransmits at least one first data block associated with the AI information according to the retransmission indication information. For information (3.3), the second device retransmits at least one AI information data packet associated with at least one first data block associated with the AI information according to the retransmission indication information. For information (3.4), the second device retransmits the entire AI information according to the retransmission indication information.

In some embodiments, the first information includes at least one of the following information: (4.1) a radio bearer (RB) ID for which data retransmission is required; (4.2) a session ID for which data retransmission is required; (4.3) an AI/ML model ID for which data retransmission is required; (4.4) a data block ID associated with a first data block for which data retransmission is required; (4.5) start packet number information of an AI information data packet for which data retransmission is required; (4.6) end packet number information of an AI information data packet for which data retransmission is required; (4.7) total packet number information of AI information data packets for which data retransmission is required; (4.8) start data block ID information associated with a first data block for which data retransmission is required; (4.9) end data block ID information associated with a first data block for which data retransmission is required; or (4.10) total block number information of first data blocks for which data retransmission is required.

For information (4.1) to (4.4), information (4.1) to (4.4) are simple identification information. Information (4.1) is used to identify an RB. Information (4.2) is used to identify a session. Information (4.3) is used to identify an AI/ML model. Information (4.4) is used to identify a data block associated with a first data block.

For information (4.5) to (4.7), information (4.5) indicates the start position of an AI information data packet for data retransmission. Information (4.5) itself can be counted within the range of the AI information data packet for data retransmission, or the protocol can stipulate that data retransmission starts from the next AI information data packet of the AI information data packet specified by information (4.5). Information (4.6) indicates the end position of an AI information data packet for data retransmission. Information (4.6) itself can be counted within the range of the AI information data packet for data retransmission, or the protocol can stipulate that the AI information data packet corresponding to information (4.6) is out of the range of the AI information data packet for retransmission. Information (4.7) indicates the total number of AI information data packets for data retransmission. Information (4.7) and information (4.6) are not necessarily mutually exclusive. Information (4.7) and information (4.6) can be used independently or in combination. When used in combination, information (4.7) can be used for data retransmission verification to determine whether the number of retransmitted data packets received is correct.

For information (4.8) to information (4.10), information (4.8) indicates the start position of a first data block for data retransmission. Information (4.8) itself can be counted within the range of the first data block for data retransmission, or the protocol can stipulate that data retransmission starts from the next first data block of the first data block specified by information (4.8). Information (4.9) indicates the end position of a first data block for data retransmission. Information (4.9) itself can be counted within the range of the first data block for data retransmission, or the protocol can stipulate that the first data block corresponding to information (4.9) is out of the range of the first data block for data retransmission. Information (4.10) indicates the total number of first data blocks for data retransmission. Information (4.10) and information (4.9) are not necessarily mutually exclusive. Information (4.10) and information (4.9) can be used independently or in combination. When used in combination, information (4.10) can be used for data retransmission verification to determine whether the number of retransmitted first data blocks received is correct.

In some embodiments, any information included in the first information is generated according to at least one of the following granularities: session ID granularity, model ID granularity, RB ID granularity, or data block ID granularity.

Session ID granularity: One AI information is transmitted through one or more RB resources, and generation of the first information needs to be triggered at the granularity of session ID.

Model ID granularity: One AI information is transmitted through one or more RB resources, and generation of the first information needs to be triggered at the granularity of AI/ML model ID.

RB ID granularity: One AI information is transmitted through one or more RB resources, and for each RB resource or a group of RB resources, generation of the first information thereof can be independently triggered. Information on the grouping of RB resources is obtained through a configuration process.

Data block ID granularity: One AI information is transmitted through one or more RB resources, and generation of the first information needs to be triggered at the granularity of data block ID.

In some embodiments, first request information is transmitted from the second device to a first device, and the first request information is used to trigger generation of the first information.

In some embodiments, the third functional entity is included in a third protocol layer, or the third functional entity is a non-protocol layer functional entity. The third protocol layer is any one of a PHY layer, a MAC layer, a BAP layer, an RLC layer, a PDCP layer, an RRC layer, an SDAP layer, a NAS, an application layer, or a positioning function protocol layer. Alternatively, the third protocol layer is a new protocol layer other than the PHY layer, the MAC layer, the BAP layer, the RLC layer, the PDCP layer, the RRC layer, the SDAP layer, the NAS, the application layer, and the positioning function protocol layer.

The non-protocol layer functional entity indicates that the third functional entity is not a part of the protocol stack function, but is a special functional module independent of the protocol stack, for example, a functional module specifically configured to store and manage AI information, or is referred to as an AI/ML functional entity.

In some embodiments, functions (2.1) to (2.6) may share a third functional entity, or use different third functional entities respectively, which is not limited in the disclosure.

In some embodiments, the third functional entity is configured according to at least one of the following granularities: session ID granularity, model ID granularity, data block ID granularity, or RB ID granularity.

Session ID granularity: One AI information is transmitted through one or more session resources. Each session is associated with one or more RB resources. All RB resources associated with the same session are associated with the same third functional entity. In this case, the third functional entity is considered to be configured according to the session ID granularity.

Model ID granularity: One AI information is associated with one AI/ML model ID and transmitted through one or more RB resources. All RB resources associated with each AI/ML model ID are associated with the same third functional entity. In this case, the third functional entity is considered to be configured according to the model ID granularity.

RB ID granularity: One AI information is transmitted through one or more RB resources. One RB resource or a group of RB resources associated with each set of AI information is associated with the same third functional entity. In this case, the third functional entity is considered to be configured according to the RB ID granularity.

RB ID granularity and data block ID granularity: One AI information is divided into several first data blocks and transmitted through one or more RB resources. Each RB ID is associated with one data block ID or a group of data block IDs (that is, one RB resource is used to transmit one first data block or a group of first data blocks). Each data block ID or each group of data block IDs is associated with one third functional entity. In this case, the third functional entity is considered to be configured according to the RB ID granularity and the data block ID granularity.

There are many other granularity combination implementations for the third functional entity configuration, which is not limited in the disclosure.

In some embodiments, any one of AI information data packets includes a first data-packet-number information field and an AI information data field, where the first data-packet-number information field includes a first data packet number, and the first data packet number is obtained by numbering AI information data packets without distinguishing between different data blocks, and the AI information data field includes all information, part information, or an information segment of the AI information.

In some embodiments, any one of AI information data packets includes a second data-packet-number information field and an AI information data field, where the second data-packet-number information field includes a second data packet number, and the second data packet number is obtained by numbering AI information data packets by distinguishing between different data blocks, and the AI information data field includes all information, part information, or an information segment of the AI information.

In some embodiments, any one of AI information data packets includes a first data-packet-number information field, an AI information data field, and a data block ID information field, where the first data-packet-number information field includes a first data packet number, and the first data packet number is obtained by numbering AI information data packets without distinguishing between different data blocks, the AI information data field includes all information, part information, or an information segment of the AI information, and the data block ID information field includes a data block ID associated with the AI information data packet.

In some embodiments, any one of AI information data packets includes a second data-packet-number information field, an AI information data field, and a data block ID information field, where the second data-packet-number information field includes a second data packet number, and the second data packet number is obtained by numbering AI information data packets by distinguishing between different data blocks, the AI information data field includes all information, part information, or an information segment of the AI information, and the data block ID information field includes a data block ID associated with the AI information data packet.

In some embodiments, in addition to various information fields (information fields 1 to 3) listed above, any one of AI information data packets further includes at least one of a model ID information field, a model description information field, a data packet importance level indication information field, or a data packet quality of service (QoS) indication information field, which is not limited in the disclosure. The model ID information field carries model ID information of a AI/ML model to which the AI information data packet belongs. The model description information field carries model description information. The data packet importance level indication information field carries data packet importance level indication information. The data packet QoS indication information field carries data packet QoS indication information.

Data block ID: The data block ID includes at least information field 4. Information field 4 indicates data block number information. Optionally, the data block ID may also include information field 5. Information field 5 includes at least one of model ID information, model description information, a data packet importance level indication information field, or a data packet QoS indication information field. The model ID information is used to identify the AI model. The model description information is used to describe basic characteristics, such as function, usage, invocation interface, model version, model type, number of layers, etc. of the AI model. The data packet importance level indication information field carries data packet importance level indication information. The data packet QoS indication information field carries data packet QoS indication information.

In some embodiments, performing, by the second device, the transmission-related operation on the AI information and/or the at least one data block associated with the AI information and/or the AI information data packet associated with the at least one data block associated with the AI information includes: performing, by the second device, all or part of the transmission-related operation on the AI information and/or the at least one data block associated with the AI information and/or the AI information data packet associated with the at least one data block associated with the AI information by using a transmission resource configuration transmitted to a first device.

In some embodiments, performing, by the second device, the transmission-related operation on the AI information and/or the at least one data block associated with the AI information and/or the AI information data packet associated with the at least one data block associated with the AI information includes: performing, by the second device, all or part of the transmission-related operation on the AI information and/or the at least one data block associated with the AI information and/or the AI information data packet associated with the at least one data block associated with the AI information by using a transmission resource configuration transmitted by a first device.

In some embodiments, the transmission resource configuration includes at least one of the following information: (5.1) an AI/ML model ID associated with AI information to be transmitted; (5.2) session ID information associated with AI information to be transmitted; (5.3) a data block ID associated with a first data block to be transmitted; (5.4) packet number information associated with a last AI information data packet associated with AI information to be transmitted; (5.5) packet number information associated with a 1st AI information data packet associated with AI information to be transmitted; (5.6) total packet number information of AI information data packets associated with AI information to be transmitted; (5.7) an end data block ID associated with a first data block associated with AI information to be transmitted; (5.8) a start data block ID associated with a first data block associated with AI information to be transmitted; (5.9) total block number information of first data blocks associated with AI information to be transmitted; (5.10) whether data retransmission of AI information is supported; (5.11) whether transmitting first information is supported, where the first information includes retransmission indication information; or (5.12) at least one RB ID information.

In some embodiments, all information or part information of the transmission resource configuration is configured according to at least one of the following granularities: session ID granularity, model ID granularity, data block ID granularity, or RB ID granularity.

For specific implementation details of information (5.1) to (5.12), please refer to information (2.1) to (2.12) on the first device side, which will not be repeated herein.

In some embodiments, the second device transmits configuration information to a first device, where the configuration information is used to configure or indicate a transmission resource configuration.

In some embodiments, the second device receives response information from the first device, where the response information is used to confirm successful reception of the configuration information.

In some embodiments, the second device receives a model data transmission request message from a first device, where the model data transmission request message includes at least one of the following information: AI/ML model ID information associated with AI information expected to be transmitted; data block ID information associated with Al information expected to be transmitted; packet number information associated with a last AI information data packet associated with AI information expected to be transmitted; packet number information associated with a 1st AI information data packet associated with AI information expected to be transmitted; packet number information associated with at least one AI information data packet associated with AI information expected to be transmitted; end data block ID information associated with a first data block associated with AI information expected to be transmitted; start data block ID information associated with a first data block associated with AI information expected to be transmitted; or data block ID information associated with at least one first data block associated with AI information expected to be transmitted.

In some embodiments, all information or part information in the model data transmission request message is generated according to at least one of the following granularities: session ID granularity, model ID granularity, data block ID granularity, or RB ID granularity.

For the specific details of the above information, please refer to the first device side, which will not be repeated herein.

In some embodiments, the AI information includes at least one of the following information: model ID information; model description information; or model algorithm data information.

The model ID information is used to identify the AI model.

The model description information is used to describe a basic feature of the AI model. The description information of the AI model includes at least one of: a functional characteristic associated with the AI model, type information of an input parameter required for the AI model, format-requirement information of the input parameter required for the AI model, a pre-processing rule of the input parameter required for the AI model, type information of an output parameter required for the AI model, format-requirement information of the output parameter required for the AI model, a pre-processing rule of the output parameter required for the AI model, application-scenario information of the AI model, deployment-location information of the AI model, a capability requirement for application of an AI model algorithm, performance-monitoring-indicator information of the AI model algorithm, home-location information of the AI model algorithm, effective-application-range information of the AI model algorithm, generalization-characteristic information of the AI model algorithm, version information of AI model algorithm data, accuracy-level information of the AI model algorithm, or compilation or storage-format information of the AI model algorithm data.

The model algorithm data information is data information of the AI model itself, which includes at least one of: a structure data parameter or a weight parameter of an algorithm used for the AI model.

In some embodiments, in order for the first device to understand or parse the AI information, the first device needs to know format information associated with the AI information. The format information associated with the AI information is used for the first device to distinguish and understand or parse the AI information, which includes at least one of: location boundary information of each information field in the AI information; information of the number of bits occupied by each information field in the AI information; information of the number of data packets contained in each information field in the AI information; or a data-parsing algorithm or rule of each information field in the AI information.

Exemplarily, the AI information includes the model description information and the model algorithm data information. The first device needs to know location boundary information of the model description information and the model algorithm data information in the whole AI information and information of the number of bits occupied by each of the model description information and the model algorithm data information in the whole AI information, or information of the number of AI information data packets occupied by each of the model description information and the model algorithm data information in the whole AI information, to completely distinguish and separately understand the model description information and the model algorithm data.

The format information associated with the AI information is configured for the first device in at least one of the following manners: pre-definition in a communication protocol; pre-configuration by a network device; default setting; dedicated signaling; or system broadcast message.

Any message involved in the above embodiments is a unicast message, a multicast message, or a broadcast message.

Unicast message (one-to-one): a source delivers the unicast message on a unicast channel, and only a terminal device for which a corresponding unicast resource is allocated can attempt to receive the unicast message. The unicast message may be also referred to as dedicated signaling.

Multicast message (one-to-many): a source delivers the multicast message on a multicast channel, and a terminal device which is in a coverage area of a multicast signal and is a member of a group can attempt to receive the multicast message. When a terminal device joins the group, the terminal device can obtain a resource related to the multicast channel.

Broadcast message (one-to-any): a source delivers the broadcast message on a broadcast channel, and any terminal device in a coverage area of a broadcast signal can attempt to receive the broadcast message.

In some embodiments, any message is at least one of the following message types: an NAS message, an RRC message, a media access control control-element (MAC CE) message, a downlink control information (DCI) message, an uplink control information (UCI) message, a physical uplink shared channel (PUSCH) message, an inter-node message, an Xn message, an F1 message, an E1 message, an NG message, a core-network bus message.

It should be noted that above embodiments are mainly illustrated by taking the second device transmitting AI information/at least one first data block/at least one AI information data packet to the first device as an example. However, in some embodiments, the first device may transmit AI information and/or at least one first data block associated with the AI information and/or at least one AI information data packet associated with the at least one data block associated with the AI information to the second device. In this case, the first device includes the third functional entity, and the second device includes the first functional entity and the second functional entity. For specific implementation details, please refer to above embodiments.

It should be noted that above embodiments are mainly illustrated by taking the second device transmitting a transmission resource configuration to the first device, and the first device performing all or part of a transmission-related operation according to the transmission resource configuration as an example. For example, the first device is a terminal device, and the second device is a network device. However, in some embodiments, the first device may transmit a transmission resource configuration to the second device, and the second device may perform all or part of a transmission-related operation according to the transmission resource configuration. For example, the first device is a network device and the second device is a terminal device.

It should be noted that the transmission-related operation corresponding to the first device and the second device can be fully or partially interchanged or recombined, such that a new embodiment can be form according to the design of those skilled in the art.

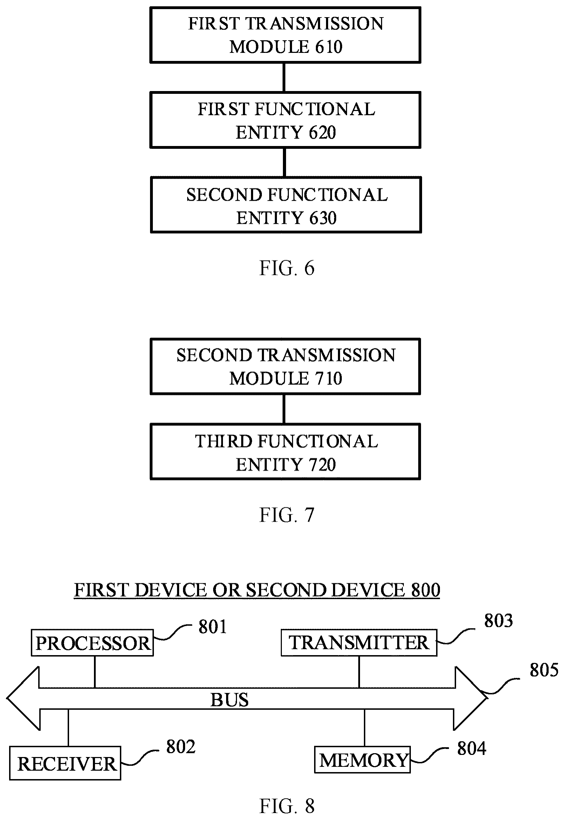

FIG. 6 is a block diagram of an information transmission apparatus provided in an exemplary embodiment of the disclosure. The apparatus includes a first transmission module 610, a first functional entity 620, and a second functional entity 630. The function of the first transmission module 610 is implemented by a transceiver in the first device, and the function of the first functional entity 620 and the function of the second functional entity 630 are implemented by a processor in the first device.

The first transmission module 610 is configured to performing, by the first device, a transmission-related operation on AI information and/or at least one data block associated with the AI information and/or an AI information data packet associated with the at least one data block associated with the AI information. The at least one data block is obtained by dividing the AI information. The AI information is information related to an AI/machine learning (ML) model.

In a possible design of this embodiment, the transmission-related operation includes at least one of: a reorganization operation; a retransmission operation; a resume operation; an update operation; or a new transmission or initial transmission operation.

In a possible design of this embodiment, the first functional entity 620 is configured to perform one or more of the following functions: associating a received AI information data packet with a data block identifier (ID) corresponding to the AI information data packet; performing a first reorganization on received AI information data packets associated with a same data block ID to obtain at least one first data block; delivering at least one first data block to a second functional entity 630; performing a second reorganization on at least one first data block to obtain the complete AI information or a part of the AI information; performing a third reorganization on received AI information data packets to obtain the complete AI information or a part of the AI information; generating a first message and transmitting the first information to a second device, where the first information includes retransmission indication information; when a first data block associated with a same AI/ML model ID and a same data block ID exists, replacing the first data block with a latest first data block obtained by reorganization; when an AI information data packet associated with a same AI/ML model ID and a same AI information data packet number exists, replacing the AI information data packet with a latest successfully received AI information data packet; when AI information associated with a same AI/ML model ID exists, replacing the AI information with latest AI information obtained by reorganization; when an AI information data packet associated with a same AI/ML model ID, a same data block ID, and a same AI information data packet number exists, replacing the AI information data packet with a latest successfully received AI information data packet; or associating at least one first data block obtained by reorganization with an AI/ML model ID corresponding to the at least one first data block, where each of the at least one first data block is associated with a data block ID.

In a possible design of this embodiment, the first functional entity 620 is configured to: add a data block ID information field to each received AI information data packet, where the data block ID information field includes a data block ID associated with the AI information data packet; and/or determine a first association, where the first association indicates an association between the AI information data packet and the data block ID.

In a possible design of this embodiment, a first functional entity configured to perform the first reorganization is the same as or different from a first functional entity configured to perform the second reorganization.

In a possible design of this embodiment, the retransmission indication information indicates to the second device at least one of: retransmitting at least one AI information data packet associated with the AI information; retransmitting at least one first data block associated with the AI information; retransmitting at least one AI information data packet associated with at least one first data block associated with the AI information; or retransmitting the AI information.

In a possible design of this embodiment, the first information includes at least one of the following information: a radio bearer (RB) ID for which data retransmission is required; a session ID for which data retransmission is required; an AI/ML model ID for which data retransmission is required; a data block ID associated with a first data block for which data retransmission is required; start packet number information of an AI information data packet for which data retransmission is required; end packet number information of an AI information data packet for which data retransmission is required; total packet number information of AI information data packets for which data retransmission is required; start data block ID information associated with a first data block for which data retransmission is required; end data block ID information associated with a first data block for which data retransmission is required; or total block number information of first data blocks for which data retransmission is required.

In a possible design of this embodiment, any information included in the first information is generated according to at least one of the following granularities: session ID granularity, model ID granularity, RB ID granularity, or data block ID granularity.

In a possible design of this embodiment, an event triggering generation of the first information includes at least one of: a first timer expires and a first reorganization of a first data block associated with the first timer is not completed; a second timer expires and a second reorganization of AI information associated with the second timer is not completed; a third timer expires and an AI information data packet associated with the third timer is not successfully received; a fourth timer expires and a third reorganization of AI information associated with the fourth timer is not completed; a fifth timer associated with a first data block expires and no AI information data packet associated with the first data block is received; a number of missed intermediate AI information data packets is greater than or equal to a first number threshold; a number of missed intermediate AI information data packets is greater than or equal to a second number threshold and lasts for a first duration; or a first request information transmitted by the second device is received.

In a possible design of this embodiment, a start condition of the first timer is successful reception of a first AI information data packet; and/or a stop condition of the first timer is completion of the first reorganization of the first data block associated with the first timer, where the first AI information data packet is an AI information data packet with a smallest number among all AI information data packets associated with the first data block associated with the first timer, or an AI information data packet with a largest number among all AI information data packets associated with the first data block associated with the first timer, or a 1 st AI information data packet successfully received by the first device among all AI information data packets associated with the first data block associated with the first timer.

In a possible design of this embodiment, a start condition of the second timer is successful reorganization of a first data block with a smallest number associated with the AI information, or successful reorganization of a first data block with a largest number associated with the AI information, or successful reorganization of a 1st first data block associated with the AI information; and/or a stop condition of the second timer is completion of the second reorganization of the AI information associated with the second timer.

In a possible design of this embodiment, a start condition of the third timer is successful reception of an AI information data packet corresponding to a previous packet number of the AI information data packet associated with the third timer; and/or a stop condition of the third timer is successful reception of the AI information data packet associated with the third timer.

In a possible design of this embodiment, a start condition of the fourth timer is successful reception of a second AI information data packet; and/or a stop condition of the fourth timer is completion of the third reorganization of the AI information associated with the fourth timer, where the second AI information data packet is an AI information data packet with a smallest number among all AI information data packets associated with the AI information associated with the fourth timer, or an AI information data packet with a largest number among all AI information data packets associated with the AI information associated with the fourth timer, or a 1st AI information data packet successfully received by the first device among all AI information data packets associated with the AI information associated with the fourth timer.

In a possible design of this embodiment, a start condition of the fifth timer is successful reception of a transmission resource configuration corresponding to transmission of an AI information data packet associated with the first data block; and/or a stop condition of the fifth timer is successful reception of a 1st AI information data packet, or successful reception of an AI information data packet with a largest packet number among AI information data packets, or successful reception of an AI information data packet with a smallest packet number among AI information data packets, and the AI information data packet is associated with the first data block.

In a possible design of this embodiment, the first functional entity 620 is included in a first protocol layer, or the first functional entity 620 is a non-protocol layer functional entity, where the first protocol layer is any one of a physical (PHY) layer, a media access control (MAC) layer, a backhaul adaptation protocol (BAP) layer, a radio link control (RLC) layer, a packet data convergence protocol (PDCP) layer, a radio resource control (RRC) layer, a service data adaptation protocol (SDAP) layer, a non-access stratum (NAS), an application layer, or a positioning function protocol layer, or the first protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In a possible design of this embodiment, the first functional entity 620 is configured according to at least one of the following granularities: session ID granularity, model ID granularity, data block ID granularity, or RB ID granularity.

In a possible design of this embodiment, the second functional entity 630 is configured to perform at least one of the following functions: performing a second reorganization on at least one first data block to obtain the complete AI information or a part of the AI information; generating a first message and transmitting the first information to a second device, where the first information includes retransmission indication information; when a first data block associated with a same AI/ML model ID and a same data block ID exists, replacing the first data block with a latest first data block obtained by reorganization; when an AI information data packet associated with a same AI/ML model ID and a same AI information data packet number exists, replacing the AI information data packet with a latest successfully received AI information data packet; when AI information associated with a same AI/ML model ID exists, replacing the AI information with latest AI information obtained by reorganization; when an AI information data packet associated with a same AI/ML model ID, a same data block ID, and a same AI information data packet number exists, replacing the AI information data packet with a latest successfully received AI information data packet; or associating at least one first data block obtained by reorganization with an AI/ML model ID corresponding to the at least one first data block.

In a possible design of this embodiment, the second functional entity 630 is included in a second protocol layer, or the second functional entity 630 is a non-protocol layer functional entity, where the second protocol layer is any one of a PHY layer, a MAC layer, a BAP layer, an RLC layer, a PDCP layer, an RRC layer, an SDAP layer, a NAS, an application layer, or a positioning function protocol layer, or the second protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In a possible design of this embodiment, any one of AI information data packets includes a first data-packet-number information field and an AI information data field, where the first data-packet-number information field includes a first data packet number, and the first data packet number is obtained by numbering AI information data packets without distinguishing between different data blocks, and the Al information data field includes all information, part information, or an information segment of the AI information.

In a possible design of this embodiment, any one of AI information data packets includes a second data-packet-number information field and an AI information data field, where the second data-packet-number information field includes a second data packet number, and the second data packet number is obtained by numbering AI information data packets by distinguishing between different data blocks, and the AI information data field includes all information, part information, or an information segment of the AI information.

In a possible design of this embodiment, any one of AI information data packets includes a first data-packet-number information field, an AI information data field, and a data block ID information field, where the first data-packet-number information field includes a first data packet number, and the first data packet number is obtained by numbering AI information data packets without distinguishing between different data blocks, the AI information data field includes all information, part information, or an information segment of the AI information, and the data block ID information field includes a data block ID associated with the AI information data packet.

In a possible design of this embodiment, any one of AI information data packets includes a second data-packet-number information field, an AI information data field, and a data block ID information field, where the second data-packet-number information field includes a second data packet number, and the second data packet number is obtained by numbering AI information data packets by distinguishing between different data blocks, the AI information data field includes all information, part information, or an information segment of the AI information, and the data block ID information field includes a data block ID associated with the AI information data packet.

In a possible design of this embodiment, any one of AI information data packets further includes at least one of a model ID information field, a model description information field, a data packet importance level indication information field, or a data packet indication information field.

In a possible design of this embodiment, the first transmission module 610 is configured to perform all or part of the transmission-related operation on the AI information and/or the at least one data block associated with the AI information and/or the AI information data packet associated with the at least one data block associated with the AI information by using a transmission resource configuration transmitted by a second device.

In a possible design of this embodiment, the first transmission module 610 is configured to perform all or part of the transmission-related operation on the AI information and/or the at least one data block associated with the AI information and/or the AI information data packet associated with the at least one data block associated with the AI information by using a transmission resource configuration transmitted to a second device.

In a possible design of this embodiment, the transmission resource configuration includes at least one of the following information: an AI/ML model ID associated with AI information to be transmitted; session ID information associated with AI information to be transmitted; a data block ID associated with a first data block to be transmitted; packet number information associated with a last AI information data packet associated with AI information to be transmitted; packet number information associated with a 1st AI information data packet associated with AI information to be transmitted; total packet number information of AI information data packets associated with AI information to be transmitted; an end data block ID associated with a first data block associated with AI information to be transmitted; a start data block ID associated with a first data block associated with AI information to be transmitted; total block number information of first data blocks associated with AI information to be transmitted; whether data retransmission of AI information is supported; whether transmitting first information is supported, where the first information includes retransmission indication information; or at least one RB ID information.

In a possible design of this embodiment, all information or part information of the transmission resource configuration is configured according to at least one of the following granularities: session ID granularity, model ID granularity, data block ID granularity, or RB ID granularity.

In a possible design of this embodiment, the first transmission module 610 is further configured to receive configuration information from the second device, where the configuration information is used to configure or indicate the transmission resource configuration.

In a possible design of this embodiment, the first transmission module 610 is further configured to transmit response information to the second device, where the response information is used to confirm successful reception of the configuration information.

In a possible design of this embodiment, the model data transmission request message includes at least one of the following information: AI/ML model ID information associated with AI information expected to be transmitted; data block ID information associated with AI information expected to be transmitted; packet number information associated with a last AI information data packet associated with AI information expected to be transmitted; packet number information associated with a 1st AI information data packet associated with AI information expected to be transmitted; packet number information associated with at least one AI information data packet associated with AI information expected to be transmitted; end data block ID information associated with a first data block associated with AI information expected to be transmitted; start data block ID information associated with a first data block associated with AI information expected to be transmitted; or data block ID information associated with at least one first data block associated with AI information expected to be transmitted.

In a possible design of this embodiment, the AI information includes at least one of the following information: model ID information; model description information; or model algorithm data information.

In a possible design of this embodiment, the first device and the second device satisfy one of: the first device is a terminal device, and the second device is a network device; the first device is a network device, and the second device is a terminal device; the first device and the second device are both network devices; or the first device and the second device are both terminal devices.

FIG. 7 is a block diagram of an information transmission apparatus provided in an exemplary embodiment of the disclosure. The apparatus includes a second transmission module 710 and a third functional entity 720. The function of the second transmission module 710 is implemented by a transceiver in the second device, and the function of the third functional entity 720 is implemented by a processor in the second device.

The second transmission module 710 is configured to perform a transmission-related operation on AI information and/or at least one data block associated with the AI information and/or an AI information data packet associated with the at least one data block associated with the AI information. The at least one data block is obtained by dividing the AI information. The AI information is information related to an AI/machine learning (ML) model.

In a possible design of this embodiment, the transmission-related operation includes at least one of: a dividing operation; a retransmission operation; a resume operation; an update operation; or a new transmission or initial transmission operation.

In a possible design of this embodiment, the third functional entity 720 is configured to perform one or more of the following functions: dividing the AI information into at least one first data block; dividing a first data block into at least one AI information data packet; dividing the AI information into at least one AI information data packet; passing an AI information data packet to a lower protocol layer, another protocol layer, or another functional entity in a same protocol layer; receiving first information, where the first information includes retransmission indication information; or triggering AI information data retransmission according indication of first information.

In a possible design of this embodiment, the retransmission indication information indicates to the second device at least one of: retransmitting at least one AI information data packet associated with the AI information; retransmitting at least one first data block associated with the AI information; retransmitting at least one AI information data packet associated with at least one first data block associated with the AI information; or retransmitting the AI information.

In a possible design of this embodiment, the first information includes at least one of the following information: a radio bearer (RB) ID for which data retransmission is required; a session ID for which data retransmission is required; an AI/ML model ID for which data retransmission is required; a data block ID associated with a first data block for which data retransmission is required; start packet number information of an AI information data packet for which data retransmission is required; end packet number information of an AI information data packet for which data retransmission is required; total packet number information of AI information data packets for which data retransmission is required; start data block ID information associated with a first data block for which data retransmission is required; end data block ID information associated with a first data block for which data retransmission is required; or total block number information of first data blocks for which data retransmission is required.

In a possible design of this embodiment, any information included in the first information is generated according to at least one of the following granularities: session ID granularity, model ID granularity, RB ID granularity, or data block ID granularity.

In a possible design of this embodiment, the second transmission module 710 is configured to transmit first request information to a first device, and the first request information is used to trigger generation of the first information.

In a possible design of this embodiment, the third functional entity 720 is included in a third protocol layer, or the third functional entity 720 is a non-protocol layer functional entity; where the third protocol layer is any one of a physical (PHY) layer, a media access control (MAC) layer, a backhaul adaptation protocol (BAP) layer, a radio link control (RLC) layer, a packet data convergence protocol (PDCP) layer, a radio resource control (RRC) layer, a service data adaptation protocol (SDAP) layer, a non-access stratum (NAS), an application layer, or a positioning function protocol layer, or the first protocol layer is a new protocol layer other than the PHY layer, the MAC layer, the BAP layer, the RLC layer, the PDCP layer, the RRC layer, the SDAP layer, the NAS, the application layer, and the positioning function protocol layer.

In a possible design of this embodiment, the third functional entity 720 is configured according to at least one of the following granularities: session ID granularity, model ID granularity, data block ID granularity, or RB ID granularity.

In a possible design of this embodiment, any one of AI information data packets includes a first data-packet-number information field and an AI information data field, where the first data-packet-number information field includes a first data packet number, and the first data packet number is obtained by numbering AI information data packets without distinguishing between different data blocks, and the AI information data field includes all information, part information, or an information segment of the AI information.

In a possible design of this embodiment, any one of AI information data packets includes a second data-packet-number information field and an AI information data field, where the second data-packet-number information field includes a second data packet number, and the second data packet number is obtained by numbering AI information data packets by distinguishing between different data blocks, and the AI information data field includes all information, part information, or an information segment of the AI information.

In a possible design of this embodiment, any one of AI information data packets includes a first data-packet-number information field, an AI information data field, and a data block ID information field, where the first data-packet-number information field includes a first data packet number, and the first data packet number is obtained by numbering AI information data packets without distinguishing between different data blocks, the AI information data field includes all information, part information, or an information segment of the AI information, and the data block ID information field includes a data block ID associated with the AI information data packet.

In a possible design of this embodiment, any one of AI information data packets includes a second data-packet-number information field, an AI information data field, and a data block ID information field, where the second data-packet-number information field includes a second data packet number, and the second data packet number is obtained by numbering AI information data packets by distinguishing between different data blocks, the AI information data field includes all information, part information, or an information segment of the AI information, and the data block ID information field includes a data block ID associated with the AI information data packet.

In a possible design of this embodiment, any one of AI information data packets further includes at least one of a model ID information field, a model description information field, a data packet importance level indication information field, or a data packet quality of service (QoS) indication information field.

In a possible design of this embodiment, the second transmission module 710 is configured to perform all or part of the transmission-related operation on the AI information and/or the at least one data block associated with the AI information and/or the AI information data packet associated with the at least one data block associated with the AI information by using a transmission resource configuration transmitted to a first device.

In a possible design of this embodiment, the second transmission module 710 is configured to perform all or part of the transmission-related operation on the AI information and/or the at least one data block associated with the AI information and/or the AI information data packet associated with the at least one data block associated with the AI information by using a transmission resource configuration transmitted by a first device.

In a possible design of this embodiment, the transmission resource configuration includes at least one of the following information: an AI/ML model ID associated with AI information to be transmitted; session ID information associated with AI information to be transmitted; a data block ID associated with a first data block to be transmitted; packet number information associated with a last AI information data packet associated with AI information to be transmitted; packet number information associated with a 1st AI information data packet associated with AI information to be transmitted; total packet number information of AI information data packets associated with AI information to be transmitted; an end data block ID associated with a first data block associated with AI information to be transmitted; a start data block ID associated with a first data block associated with AI information to be transmitted; total block number information of first data blocks associated with AI information to be transmitted; whether data retransmission of AI information is supported; whether transmitting first information is supported, where the first information includes retransmission indication information; or at least one RB ID information.

In a possible design of this embodiment, all information or part information of the transmission resource configuration is configured according to at least one of the following granularities: session ID granularity, model ID granularity, data block ID granularity, or RB ID granularity.

In a possible design of this embodiment, the second transmission module 710 is further configured to transmit configuration information to a first device, where the configuration information is used to configure or indicate a transmission resource configuration.

In a possible design of this embodiment, the second transmission module 710 is further configured to receive response information from the first device, where the response information is used to confirm successful reception of the configuration information.

In a possible design of this embodiment, the second transmission module 710 is further configured to receive a model data transmission request message from a first device.

In a possible design of this embodiment, the model data transmission request message includes at least one of the following information: AI/ML model ID information associated with AI information expected to be transmitted; data block ID information associated with AI information expected to be transmitted; packet number information associated with a last AI information data packet associated with AI information expected to be transmitted; packet number information associated with a 1st AI information data packet associated with AI information expected to be transmitted; packet number information associated with at least one AI information data packet associated with AI information expected to be transmitted; end data block ID information associated with a first data block associated with AI information expected to be transmitted; start data block ID information associated with a first data block associated with AI information expected to be transmitted; or data block ID information associated with at least one first data block associated with AI information expected to be transmitted.

In a possible design of this embodiment, the AI information includes at least one of the following information: model ID information; model description information; or model algorithm data information.

In a possible design of this embodiment, the first device and the second device satisfy one of: the first device is a terminal device, and the second device is a network device; the first device is a network device, and the second device is a terminal device; the first device and the second device are both network devices; or the first device and the second device are both terminal devices.

FIG. 8 is a schematic structural diagram of a first device or a second device 800 provided in an exemplary embodiment of the disclosure. The first device or the second device 800 includes a processor 801, a receiver 802, a transmitter 803, a memory 804, and a bus 805.

The processor 801 includes one or more processing cores, and the processor 801 executes various function applications and information processing by running software programs and modules.

The receiver 802 and the transmitter 803 may be implemented as a communication assembly, and the communication assembly may be a communication chip. The communication chip may be also referred to as a transceiver.

The memory 804 is connected to the processor 801 via the bus 805.

The memory 804 may be configured to store at least one instruction. The processor 801 is configured to execute the at least one instruction to implement various steps in the above method embodiments.

In addition, the memory 804 may be implemented by any type of volatile storage device or non-volatile storage device or a combination thereof. The volatile storage device or non-volatile storage device includes, but is not limited to, a magnetic disk or an optical disk, an electrically erasable programmable read-only memory (EEPROM), an erasable programmable read-only memory (EPROM), a static random-access memory (SRAM), a read-only memory (ROM), a magnetic memory, a flash memory, and a programmable read-only memory (PROM).

In a possible implementation, a transceiver in the first device is configured for the first device to perform a transmission-related operation on AI information and/or at least one data block associated with the AI information and/or an AI information data packet associated with the at least one data block associated with the AI information. The at least one data block is obtained by dividing the AI information. The AI information is information related to an AI/machine learning (ML) model.

In a possible implementation, a transceiver in the second device is configured for the second device to perform a transmission-related operation on AI information and/or at least one data block associated with the AI information and/or an AI information data packet associated with the at least one data block associated with the AI information. The at least one data block is obtained by dividing the AI information. The AI information is information related to an AI/machine learning (ML) model.

In an exemplary embodiment, a computer-readable storage medium is further provided. The computer-readable storage medium is configured to store at least one instruction, at least one program, a code set, or an instruction set which is loaded and executed by a processor to implement the information transmission method provided in the above method embodiments.

In an exemplary embodiment, a computer program product or a computer program is further provided. The computer program product or the computer program, when executed by a processor, causes the first device to perform the information transmission method provided in the above method embodiments.

It will be understood by those of ordinary skill in the art that, all or part of the steps in the above embodiments may be accomplished by means of hardware, or a program to instruct associated hardware. The program may be stored in a computer-readable storage medium. The storage medium may be an ROM, a magnetic disk, or an optical disk, etc.

The foregoing elaborations are merely optional embodiments of the disclosure, and are not intended for limiting the disclosure. Any modification, equivalent replacement, and improvement made within the concept and principle of the disclosure shall fall within the protection scope of the disclosure.

## Claims

1. An information transmission method, performed by a first device and comprising:
performing, by the first device, a transmission-related operation on artificial intelligence (AI) information and/or at least one data block associated with the AI information and/or an AI information data packet associated with the at least one data block associated with the AI information, wherein the at least one data block is obtained by dividing the AI information, wherein
the AI information is information related to an AI/machine learning (ML) model.

2. The method of claim 1, wherein the transmission-related operation comprises at least one of:
a reorganization operation;
a retransmission operation;
a resume operation;
an update operation; or
a new transmission or initial transmission operation.

3. The method of claim 1 or 2, wherein the first device comprises at least one first functional entity, and the first functional entity is configured to perform one or more of the following functions:
associating a received AI information data packet with a data block identifier (ID) corresponding to the AI information data packet;
performing a first reorganization on received AI information data packets associated with a same data block ID to obtain at least one first data block;
delivering at least one first data block to a second functional entity;
performing a second reorganization on at least one first data block to obtain the complete AI information or a part of the AI information;
performing a third reorganization on received AI information data packets to obtain the complete AI information or a part of the AI information;
generating a first message and transmitting the first information to a second device, wherein the first information comprises retransmission indication information;
when a first data block associated with a same AI/ML model ID and a same data block ID exists, replacing the first data block with a latest first data block obtained by reorganization;
when an AI information data packet associated with a same AI/ML model ID and a same AI information data packet number exists, replacing the AI information data packet with a latest successfully received AI information data packet;
when AI information associated with a same AI/ML model ID exists, replacing the AI information with latest AI information obtained by reorganization;
when an AI information data packet associated with a same AI/ML model ID, a same data block ID, and a same AI information data packet number exists, replacing the AI information data packet with a latest successfully received AI information data packet; or
associating at least one first data block obtained by reorganization with an AI/ML model ID corresponding to the at least one first data block, wherein
each of the at least one first data block is associated with a data block ID.

4. The method of claim 3, wherein associating the received AI information data packet with the data block ID corresponding to the AI information data packet comprises at least one of:
adding a data block ID information field to each received AI information data packet, wherein the data block ID information field comprises a data block ID associated with the AI information data packet; or
determining a first association, wherein the first association indicates an association between the AI information data packet and the data block ID.

5. The method of claim 3, wherein a first functional entity configured to perform the first reorganization is the same as or different from a first functional entity configured to perform the second reorganization.

6. The method of claim 3, wherein the retransmission indication information indicates to the second device at least one of:
retransmitting at least one AI information data packet associated with the AI information;
retransmitting at least one first data block associated with the AI information;
retransmitting at least one AI information data packet associated with at least one first data block associated with the AI information; or
retransmitting the AI information.

7. The method of claim 3 or 6, wherein the first information comprises at least one of the following information:
a radio bearer (RB) ID for which data retransmission is required;
a session ID for which data retransmission is required;
an AI/ML model ID for which data retransmission is required;
a data block ID associated with a first data block for which data retransmission is required;
start packet number information of an AI information data packet for which data retransmission is required;
end packet number information of an AI information data packet for which data retransmission is required;
total packet number information of AI information data packets for which data retransmission is required;
start data block ID information associated with a first data block for which data retransmission is required;
end data block ID information associated with a first data block for which data retransmission is required; or
total block number information of first data blocks for which data retransmission is required.

8. The method of claim 3, 6, or 7, wherein any information comprised in the first information is generated according to at least one of the following granularities:
session ID granularity;
model ID granularity;
RB ID granularity; or
data block ID granularity.

9. The method of claim 3, 6, 7, or 8, wherein an event triggering generation of the first information comprises at least one of:
a first timer expires and a first reorganization of a first data block associated with the first timer is not completed;
a second timer expires and a second reorganization of AI information associated with the second timer is not completed;
a third timer expires and an AI information data packet associated with the third timer is not successfully received;
a fourth timer expires and a third reorganization of AI information associated with the fourth timer is not completed;
a fifth timer associated with a first data block expires and no AI information data packet associated with the first data block is received;
a number of missed intermediate AI information data packets is greater than or equal to a first number threshold;
a number of missed intermediate AI information data packets is greater than or equal to a second number threshold for a first duration; or
a first request information transmitted by the second device is received.

10. The method of claim 9, wherein
a start condition of the first timer is successful reception of a first AI information data packet; and/or
a stop condition of the first timer is completion of the first reorganization of the first data block associated with the first timer, wherein
the first AI information data packet is an AI information data packet with a smallest number among all AI information data packets associated with the first data block associated with the first timer, or an AI information data packet with a largest number among all AI information data packets associated with the first data block associated with the first timer, or a 1st AI information data packet successfully received by the first device among all AI information data packets associated with the first data block associated with the first timer.

11. The method of claim 9, wherein
a start condition of the second timer is successful reorganization of a first data block with a smallest number associated with the AI information, or successful reorganization of a first data block with a largest number associated with the AI information, or successful reorganization of a 1st first data block associated with the AI information; and/or
a stop condition of the second timer is completion of the second reorganization of the AI information associated with the second timer.

12. The method of claim 9, wherein
a start condition of the third timer is successful reception of an AI information data packet corresponding to a previous packet number of the AI information data packet associated with the third timer; and/or
a stop condition of the third timer is successful reception of the AI information data packet associated with the third timer.

13. The method of claim 9, wherein
a start condition of the fourth timer is successful reception of a second AI information data packet; and/or
a stop condition of the fourth timer is completion of the third reorganization of the AI information associated with the fourth timer, wherein
the second AI information data packet is an AI information data packet with a smallest number among all AI information data packets associated with the AI information associated with the fourth timer, or an AI information data packet with a largest number among all AI information data packets associated with the AI information associated with the fourth timer, or a 1st AI information data packet successfully received by the first device among all AI information data packets associated with the AI information associated with the fourth timer.

14. The method of claim 9, wherein
a start condition of the fifth timer is successful reception of a transmission resource configuration corresponding to transmission of an AI information data packet associated with the first data block; and/or
a stop condition of the fifth timer is successful reception of a 1st AI information data packet, or successful reception of an AI information data packet with a largest packet number among AI information data packets, or successful reception of an AI information data packet with a smallest packet number among AI information data packets, and the AI information data packet is associated with the first data block.

15. The method of any of claims 3 to 14, wherein the first functional entity is comprised in a first protocol layer, or the first functional entity is a non-protocol layer functional entity, wherein
the first protocol layer is any one of a physical (PHY) layer, a media access control (MAC) layer, a backhaul adaptation protocol (BAP) layer, a radio link control (RLC) layer, a packet data convergence protocol (PDCP) layer, a radio resource control (RRC) layer, a service data adaptation protocol (SDAP) layer, a non-access stratum (NAS), an application layer, or a positioning function protocol layer, or the first protocol layer is a new protocol layer other than the PHY layer, the MAC layer, the BAP layer, the RLC layer, the PDCP layer, the RRC layer, the SDAP layer, the NAS, the application layer, and the positioning function protocol layer.

16. The method of claim 15, wherein the first functional entity is configured according to at least one of the following granularities:
session ID granularity;
model ID granularity;
data block ID granularity; or
RB ID granularity.

17. The method of any of claims 3 to 16, wherein the second functional entity is configured to perform at least one of the following functions:
performing a second reorganization on at least one first data block to obtain the complete AI information or a part of the AI information;
generating a first message and transmitting the first information to a second device, wherein the first information comprises retransmission indication information;
when a first data block associated with a same AI/ML model ID and a same data block ID exists, replacing the first data block with a latest first data block obtained by reorganization;
when an AI information data packet associated with a same AI/ML model ID and a same AI information data packet number exists, replacing the AI information data packet with a latest successfully received AI information data packet;
when AI information associated with a same AI/ML model ID exists, replacing the AI information with latest AI information obtained by reorganization;
when an AI information data packet associated with a same AI/ML model ID, a same data block ID, and a same AI information data packet number exists, replacing the AI information data packet with a latest successfully received AI information data packet; or
associating at least one first data block obtained by reorganization with an AI/ML model ID corresponding to the at least one first data block.

18. The method of claim 17, wherein the second functional entity is comprised in a second protocol layer, or the second functional entity is a non-protocol layer functional entity, wherein
the second protocol layer is any one of a PHY layer, a MAC layer, a BAP layer, an RLC layer, a PDCP layer, an RRC layer, an SDAP layer, a NAS, an application layer, or a positioning function protocol layer, or the second protocol layer is a new protocol layer other than the PHY layer, the MAC layer, the BAP layer, the RLC layer, the PDCP layer, the RRC layer, the SDAP layer, the NAS, the application layer, and the positioning function protocol layer.

19. The method of any of claims 3 to 18, wherein any one of AI information data packets comprises a first data-packet-number information field and an AI information data field, wherein
the first data-packet-number information field comprises a first data packet number, and the first data packet number is obtained by numbering AI information data packets without distinguishing between different data blocks, and
the AI information data field comprises all information, part information, or an information segment of the AI information.

20. The method of any of claims 3 to 18, wherein any one of AI information data packets comprises a second data-packet-number information field and an AI information data field, wherein
the second data-packet-number information field comprises a second data packet number, and the second data packet number is obtained by numbering AI information data packets by distinguishing between different data blocks, and
the AI information data field comprises all information, part information, or an information segment of the AI information.

21. The method of any of claims 3 to 18, wherein any one of AI information data packets comprises a first data-packet-number information field, an AI information data field, and a data block ID information field, wherein
the first data-packet-number information field comprises a first data packet number, and the first data packet number is obtained by numbering AI information data packets without distinguishing between different data blocks,
the AI information data field comprises all information, part information, or an information segment of the AI information, and
the data block ID information field comprises a data block ID associated with the AI information data packet.

22. The method of any of claims 3 to 18, wherein any one of AI information data packets comprises a second data-packet-number information field, an AI information data field, and a data block ID information field, wherein
the second data-packet-number information field comprises a second data packet number, and the second data packet number is obtained by numbering AI information data packets by distinguishing between different data blocks,
the AI information data field comprises all information, part information, or an information segment of the AI information, and
the data block ID information field comprises a data block ID associated with the AI information data packet.

23. The method of any of claims 19 to 22, wherein any one of AI information data packets further comprises at least one of a model ID information field, a model description information field, a data packet importance level indication information field, or a data packet quality of service (QoS) indication information field.

24. The method of any of claims 1 to 23, wherein performing, by the first device, the transmission-related operation on the AI information and/or the at least one data block associated with the AI information and/or the AI information data packet associated with the at least one data block associated with the AI information comprises:
performing, by the first device, all or part of the transmission-related operation on the AI information and/or the at least one data block associated with the AI information and/or the AI information data packet associated with the at least one data block associated with the AI information by using a transmission resource configuration transmitted by a second device.

25. The method of any of claims 1 to 23, wherein performing, by the first device, the transmission-related operation on the AI information and/or the at least one data block associated with the AI information and/or the AI information data packet associated with the at least one data block associated with the AI information comprises:
performing, by the first device, all or part of the transmission-related operation on the AI information and/or the at least one data block associated with the AI information and/or the AI information data packet associated with the at least one data block associated with the AI information by using a transmission resource configuration transmitted to a second device.

26. The method of claim 24 or 25, wherein the transmission resource configuration comprises at least one of the following information:
an AI/ML model ID associated with AI information to be transmitted;
session ID information associated with AI information to be transmitted;
a data block ID associated with a first data block to be transmitted;
packet number information associated with a last AI information data packet associated with AI information to be transmitted;
packet number information associated with a 1st AI information data packet associated with AI information to be transmitted;
total packet number information of AI information data packets associated with AI information to be transmitted;
an end data block ID associated with a first data block associated with AI information to be transmitted;
a start data block ID associated with a first data block associated with AI information to be transmitted;
total block number information of first data blocks associated with AI information to be transmitted;
whether data retransmission of AI information is supported;
whether transmitting first information is supported, wherein the first information comprises retransmission indication information; or
at least one RB ID information.

27. The method of claim 26, wherein all information or part information of the transmission resource configuration is configured according to at least one of the following granularities:
session ID granularity;
model ID granularity;
data block ID granularity; or
RB ID granularity.

28. The method of any of claims 24 to 27, further comprising:
receiving, by the first device, configuration information from the second device, wherein the configuration information is used to configure or indicate the transmission resource configuration.

29. The method of claim 28, further comprising:
transmitting, by the first device, response information to the second device, wherein the response information is used to confirm successful reception of the configuration information.

30. The method of any of claims 1 to 29, further comprising:
transmitting, by the first device, a model data transmission request message to a second device.

31. The method of claim 30, wherein the model data transmission request message comprises at least one of the following information:
AI/ML model ID information associated with AI information expected to be transmitted;
data block ID information associated with AI information expected to be transmitted;
packet number information associated with a last AI information data packet associated with AI information expected to be transmitted;
packet number information associated with a 1st AI information data packet associated with AI information expected to be transmitted;
packet number information associated with at least one AI information data packet associated with AI information expected to be transmitted;
end data block ID information associated with a first data block associated with AI information expected to be transmitted;
start data block ID information associated with a first data block associated with AI information expected to be transmitted; or
data block ID information associated with at least one first data block associated with AI information expected to be transmitted.

32. The method of any of claims 1 to 31, wherein the AI information comprises at least one of the following information:
model ID information;
model description information; or
model algorithm data information.

33. The method of any of claims 1 to 32, wherein the first device and the second device satisfy one of:
the first device is a terminal device, and the second device is a network device;
the first device is a network device, and the second device is a terminal device;
the first device and the second device are both network devices; or
the first device and the second device are both terminal devices.

34. An information transmission method, performed by a second device and comprising:
performing, by the second device, a transmission-related operation on artificial intelligence (AI) information and/or at least one data block associated with the AI information and/or an AI information data packet associated with the at least one data block associated with the AI information, wherein the at least one data block is obtained by dividing the AI information, wherein
the AI information is information related to an AI/machine learning (ML) model.

35. The method of claim 34, wherein the transmission-related operation comprises at least one of:
a dividing operation;
a retransmission operation;
a resume operation;
an update operation; or
a new transmission or initial transmission operation.

36. The method of claim 34 or 35, wherein the second device comprises at least one third functional entity, and the third functional entity is configured to perform one or more of the following functions:
dividing the AI information into at least one first data block;
dividing a first data block into at least one AI information data packet;
dividing the AI information into at least one AI information data packet;
passing an AI information data packet to a lower protocol layer, another protocol layer, or another functional entity in a same protocol layer;
receiving first information, wherein the first information comprises retransmission indication information; or
triggering AI information data retransmission according indication of first information.

37. The method of claim 36, wherein the retransmission indication information indicates to the second device at least one of:
retransmitting at least one AI information data packet associated with the AI information;
retransmitting at least one first data block associated with the AI information;
retransmitting at least one AI information data packet associated with at least one first data block associated with the AI information; or
retransmitting the AI information.

38. The method of claim 36 or 37, wherein the first information comprises at least one of the following information:
a radio bearer (RB) ID for which data retransmission is required;
a session ID for which data retransmission is required;
an AI/ML model ID for which data retransmission is required;
a data block ID associated with a first data block for which data retransmission is required;
start packet number information of an AI information data packet for which data retransmission is required;
end packet number information of an AI information data packet for which data retransmission is required;
total packet number information of AI information data packets for which data retransmission is required;
start data block ID information associated with a first data block for which data retransmission is required;
end data block ID information associated with a first data block for which data retransmission is required; or
total block number information of first data blocks for which data retransmission is required.

39. The method of any of claims 36 to 38, wherein any information comprised in the first information is generated according to at least one of the following granularities:
session ID granularity;
model ID granularity;
RB ID granularity; or
data block ID granularity.

40. The method of any of claims 36 to 39, wherein first request information is transmitted from the second device to a first device, and the first request information is used to trigger generation of the first information.

41. The method of claim 36, wherein the third functional entity is comprised in a third protocol layer, or the third functional entity is a non-protocol layer functional entity, wherein
the third protocol layer is any one of a physical (PHY) layer, a media access control (MAC) layer, a backhaul adaptation protocol (BAP) layer, a radio link control (RLC) layer, a packet data convergence protocol (PDCP) layer, a radio resource control (RRC) layer, a service data adaptation protocol (SDAP) layer, a non-access stratum (NAS), an application layer, or a positioning function protocol layer, or the first protocol layer is a new protocol layer other than the PHY layer, the MAC layer, the BAP layer, the RLC layer, the PDCP layer, the RRC layer, the SDAP layer, the NAS, the application layer, and the positioning function protocol layer.

42. The method of claim 41, wherein the third functional entity is configured according to at least one of the following granularities:
session ID granularity;
model ID granularity;
data block ID granularity; or
RB ID granularity.

43. The method of any of claims 36 to 42, wherein any one of AI information data packets comprises a first data-packet-number information field and an AI information data field, wherein
the first data-packet-number information field comprises a first data packet number, and the first data packet number is obtained by numbering AI information data packets without distinguishing between different data blocks, and
the AI information data field comprises all information, part information, or an information segment of the AI information.

44. The method of any of claims 36 to 42, wherein any one of AI information data packets comprises a second data-packet-number information field and an AI information data field, wherein
the second data-packet-number information field comprises a second data packet number, and the second data packet number is obtained by numbering AI information data packets by distinguishing between different data blocks, and
the AI information data field comprises all information, part information, or an information segment of the AI information.

45. The method of any of claims 36 to 42, wherein any one of AI information data packets comprises a first data-packet-number information field, an AI information data field, and a data block ID information field, wherein
the first data-packet-number information field comprises a first data packet number, and the first data packet number is obtained by numbering AI information data packets without distinguishing between different data blocks,
the AI information data field comprises all information, part information, or an information segment of the AI information, and
the data block ID information field comprises a data block ID associated with the AI information data packet.

46. The method of any of claims 36 to 42, wherein any one of AI information data packets comprises a second data-packet-number information field, an AI information data field, and a data block ID information field, wherein
the second data-packet-number information field comprises a second data packet number, and the second data packet number is obtained by numbering AI information data packets by distinguishing between different data blocks,
the AI information data field comprises all information, part information, or an information segment of the AI information, and
the data block ID information field comprises a data block ID associated with the AI information data packet.

47. The method of any of claims 43 to 46, wherein any one of AI information data packets further comprises at least one of a model ID information field, a model description information field, a data packet importance level indication information field, or a data packet quality of service (QoS) indication information field.

48. The method of any of claims 34 to 47, wherein performing, by the second device, the transmission-related operation on the AI information and/or the at least one data block associated with the AI information and/or the AI information data packet associated with the at least one data block associated with the AI information comprises:
performing, by the second device, all or part of the transmission-related operation on the AI information and/or the at least one data block associated with the AI information and/or the AI information data packet associated with the at least one data block associated with the AI information by using a transmission resource configuration transmitted to a first device.

49. The method of any of claims 34 to 47, wherein performing, by the second device, the transmission-related operation on the AI information and/or the at least one data block associated with the AI information and/or the AI information data packet associated with the at least one data block associated with the AI information comprises:
performing, by the second device, all or part of the transmission-related operation on the AI information and/or the at least one data block associated with the AI information and/or the AI information data packet associated with the at least one data block associated with the AI information by using a transmission resource configuration transmitted by a first device.

50. The method of claim 48 or 49, wherein the transmission resource configuration comprises at least one of the following information:
an AI/ML model ID associated with AI information to be transmitted;
session ID information associated with AI information to be transmitted;
a data block ID associated with a first data block to be transmitted;
packet number information associated with a last AI information data packet associated with AI information to be transmitted;
packet number information associated with a 1st AI information data packet associated with AI information to be transmitted;
total packet number information of AI information data packets associated with AI information to be transmitted;
an end data block ID associated with a first data block associated with AI information to be transmitted;
a start data block ID associated with a first data block associated with AI information to be transmitted;
total block number information of first data blocks associated with AI information to be transmitted;
whether data retransmission of AI information is supported;
whether transmitting first information is supported, wherein the first information comprises retransmission indication information; or
at least one RB ID information.

51. The method of claim 50, wherein all information or part information of the transmission resource configuration is configured according to at least one of the following granularities:
session ID granularity;
model ID granularity;
data block ID granularity; or
RB ID granularity.

52. The method of any of claims 34 to 51, further comprising:
transmitting, by the second device, configuration information to a first device, wherein the configuration information is used to configure or indicate a transmission resource configuration.

53. The method of claim 52, further comprising:
receiving, by the second device, response information from the first device, wherein the response information is used to confirm successful reception of the configuration information.

54. The method of any of claims 34 to 53, further comprising:
receiving, by the second device, a model data transmission request message from a first device.

55. The method of claim 54, wherein the model data transmission request message comprises at least one of the following information:
AI/ML model ID information associated with AI information expected to be transmitted;
data block ID information associated with AI information expected to be transmitted;
packet number information associated with a last AI information data packet associated with AI information expected to be transmitted;
packet number information associated with a 1st AI information data packet associated with AI information expected to be transmitted;
packet number information associated with at least one AI information data packet associated with AI information expected to be transmitted;
end data block ID information associated with a first data block associated with AI information expected to be transmitted;
start data block ID information associated with a first data block associated with AI information expected to be transmitted; or
data block ID information associated with at least one first data block associated with AI information expected to be transmitted.

56. The method of any of claims 34 to 55, wherein the AI information comprises at least one of the following information:
model ID information;
model description information; or
model algorithm data information.

57. The method of any of claims 34 to 56, wherein the first device and the second device satisfy one of:
the first device is a terminal device, and the second device is a network device;
the first device is a network device, and the second device is a terminal device;
the first device and the second device are both network devices; or
the first device and the second device are both terminal devices.

58. An information transmission apparatus, comprising:
a first transmission module configured to perform a transmission-related operation on artificial intelligence (AI) information and/or at least one data block associated with the AI information and/or an AI information data packet associated with the at least one data block associated with the AI information, wherein the at least one data block is obtained by dividing the AI information, wherein the AI information is information related to an AI/machine learning (ML) model.

59. An information transmission apparatus, comprising:
a second transmission module configured to perform a transmission-related operation on artificial intelligence (AI) information and/or at least one data block associated with the AI information and/or an AI information data packet associated with the at least one data block associated with the AI information, wherein the at least one data block is obtained by dividing the AI information, wherein the AI information is information related to an AI/machine learning (ML) model.

60. A first device, comprising:
a processor;
a transceiver connected to the processor; and
a memory configured to store executable instructions for the processor, wherein
the processor is configured to load and execute the executable instructions to perform the information transmission method of any of claims 1 to 33.

61. A second device, comprising:
a processor;
a transceiver connected to the processor; and
a memory configured to store executable instructions for the processor, wherein
the processor is configured to load and execute the executable instructions to perform the information transmission method of any of claims 34 to 57.

62. A computer-readable storage medium storing computer programs, wherein the computer programs are loaded and executed by a processor to perform the information transmission method of any of claims 1 to 57.

63. A computer program product comprising computer instructions, wherein the computer instructions are stored in a computer-readable storage medium and are obtained by a processor from the computer-readable storage medium to cause the processor to load and execute to perform the information transmission method of any of claims 1 to 57.

64. A computer program comprising computer instructions, wherein the computer instructions are stored in a computer-readable storage medium and are obtained by a processor from the computer-readable storage medium to cause the processor to load and execute to perform the information transmission method of any of claims 1 to 57.
